# EUROPÄISCHE PATENTSCHRIFT

(11) **EP 1 474 487 B1**
(45) Veröffentlichungstag und Bekanntmachung des Hinweises auf die Patenterteilung: **08.03.2006**
(21) Anmeldenummer: 03704369.2
(22) Anmeldetag: 10.01.2003
(51) Int. Cl.: C08G 18/38

(54) **STABILISIERTE WÄSSRIGE POLYURETHAN-POLYHARNSTOFF DISPERSIONEN**
STABILISED AQUEOUS POLYURETHANE/POLYCARBAMIDE DISPERSIONS
DISPERSIONS AQUEUSES STABILISEES DE POLYURETHANE/POLYUREE

(30) Priorität: 17.01.2002 DE 10201546
(43) Veröffentlichungstag der Anmeldung: 10.11.2004
(73) Patentinhaber: Bayer MaterialScience AG, 51368 Leverkusen (DE)
(72) Erfinder: RISCHE, Thorsten, 59423 Unna (DE); NAUJOKS, Karin, 51519 Burscheid (DE); MEIXNER, Jürgen, 47803 Krefeld (DE); FELLER, Thomas, 42659 Solingen (DE); KÖNIG, Eberhard, 51375 Leverkusen (DE)
(86) Internationale Anmeldenummer: PCT/EP2003/000160
(87) Internationale Veröffentlichungsnummer: WO 2003/060017

(56) Entgegenhaltungen:
- EP-A- 0 916 647
- DE-A- 19 637 334
- DE-A- 19 738 497

## Beschreibung

Die Erfindung betrifft gegenüber Thermovergilbung stabilisierte, wässrige Polyurethan-Polyharnstoff Dispersionen sowie deren Herstellung und Verwendung.

Bei der Beschichtung von Substraten werden zunehmend wässrige Bindemittel, insbesondere Polyurethan-Polyharnstoff (PUR)-Dispersionen verwendet. In einigen Anwendungsgebieten werden zur Trocknung der Beschichtungen hohe Temperaturen benötigt, die zu einer unerwünschten Vergilbung der Beschichtung führen.

Im Bereich der Beschlichtung von Glasfasern kommen als wässrige Bindemittel PUR-Dispersionen zum Einsatz. Bedingt durch die vergleichsweise hohen Temperaturen bei den Beschichtungs- und Trocknungsprozessen sowie bei der Eincompoundierung der beschlichteten Glasfaser in eine Kunststoffmatrix kommt es oftmals zu einer Thermovergilbung der hergestellten Beschichtungen, die unerwünscht ist.

Aus dem Stand der Technik sind zahlreiche Stabilisatoren und Additive bekannt die eine Thermovergilbung von Bindemitteln verringern können. Die Verwendung dieser Verbindungen in wässrigen Systemen, wie z.B. PUR-Dispersionen ist oft nur bedingt möglich. Die aus dem Stand der Technik bekannten Systeme erfüllen das Bedürfnis eine wässrige PUR-Dispersion oder die daraus resultierende Beschichtung gegenüber thermischer Vergilbung zu schützen, nur unzureichend.

Aus der US-A 5,216,078 ist ein Stabilisierungsmittel bekannt, dass die Thermovergilbung von blockierten, insbesondere von mit Butanonoxim blockierten Isocyanaten signifikant herabsetzt. Bei dieser Verbindung handelt es sich um ein Hydrazin-Addukt.

In der EP-A 0 829 500 werden als Stabilisierungsmittel für blockierte Polyisocyanate eine Kombination von Verbindungen beschrieben, wobei eine der Verbindungen mindestens einen 2,2,6,6-Tetramethylpiperidinyl-Rest, der sog. HALS-(hindered amine light stabilizer) Rest und die andere eine Hydrazid-Struktur aufweist.

Nachteilig an den oben genannten Systemen ist jedoch, dass sie sich nur für lösemittelhaltige Lacke und Beschichtungs- und Schlichtesysteme und nicht für wässrige Systeme eignen.

Die Herstellung von wässrigen PUR-Dispersionen ist grundsätzlich bekannt. Die verschiedenen Möglichkeiten zur Herstellung solcher Dispersionen wurden z.B. von D. Dieterich in einem Übersichtsartikel zusammengefasst (D. Dieterich, Prog. Org. Coätings 9, 281 (1981)). Das Problem der Thermovergilbung ist im Stand der Technik jedoch derzeit nicht in befriedigender Weise gelöst worden.

Die Aufgabe der vorliegenden Erfindung bestand daher in der Bereitstellung von PUR-Dispersionen, die gegenüber einer möglichen Thermovergilbung ausreichend stabilisiert sind und sich darüber hinaus als 1K- oder 2K-Bindemittel in Lacken, Schlichten und Beschichtungen eignen.

Es wurde nun gefunden, dass auch wässrige PUR-Dispersionen durch bestimmte Kombinationen aus Hydraziden und bestimmten sterisch gehinderten Aminen vor Thermovergilbung signifikant geschützt werden können.

Gegenstand der vorliegenden Erfindung ist eine Bindemittel-Zusammensetzungen enthaltend
A) mindestens eine wässrige PUR-Dispersion,
B) mindestens ein Stabilisierungsmittel bzw. Stabilisierungsmittelgemisch enthaltend
   a) mindestens ein Amin mit der Struktureinheit der allgemeinen Formel (I), 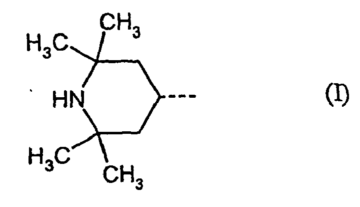 welches keine Hydrazidgruppen aufweist,
   b) mindestens eine Verbindung mit der Struktureinheit der allgemeinen Formel (II),

      -CO-NH-NH- (II)

      sowie
   c) gegebenenfalls eine von a) und b) verschiedene Stabilisierungskomponente.

Die PUR-Dispensionen werden in Gegenwart der Komponenten a) und b) hergestellt. Dabei ist es möglich, dass die Komponenten a) und b), je nach eingesetztem Typ, als Struktureinheit in das Polymergerüst eingebaut werden.

Daher sind Bindemittel-Zusammensetzungen enthaltend
A) mindestens eine wässrige PUR-Dispersion, enthaltend Struktureinheiten mindestens eines Stabilisierungsmittels bzw. Stabilisieningsmittelgemischs B) auf Basis
   a) mindestens eines Amins der allgemeinen Formel (I), 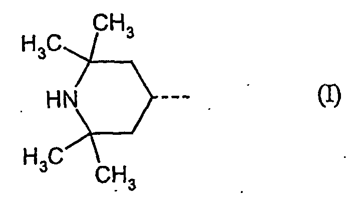 welches keine Hydrazidgruppen aufweist,
   b) mindestens einer Verbindung der allgemeinen Formel (II),

      -CO-NH-NH- (II)

      sowie
   c) gegebenenfalls einer von a) und b) verschiedene Stabilisierungskomponente,
ebenfalls Gegenstand der vorliegenden Erfindung.

Die Bindemittel-Zusammensetzung enthält 78,0 bis 99,8 Gew.-%, bevorzugt 84,0 bis 99,6 Gew.-%, besonders bevorzugt 90,0 bis 99,0 Gew.-% der Komponente A), 0,2 bis 22,0 Gew.-%, bevorzugt 0,4 bis 16,0 Gew.-%, besonders bevorzugt 1,0 bis 10,0 Gew.-% der Komponente B), wobei die Summe der Komponenten sich stets zu 100 Gew.-% addiert und den gesamten Festkörperanteil der erfindungsgemäßen Bindemittel-Zusammensetzung bildet.

Bezogen auf den Gesamtfeststoffgehalt enthalten die erfindungsgemäßen Bindemittel-Zusammensetzungen 0,1 bis 11,0 Gew.-%, bevorzugt 0,2 bis 8,0 Gew.-%, besonders bevorzugt 0,5 bis 4,0 Gew.-% Amine mit der Struktureinheit der Formel (I) (a), 0,1 bis 11,0 Gew.%, bevorzugt 0,2 bis 8,0 Gew.-%, besonders bevorzugt 0,5 bis 4,0 Gew.-% an Hydraziden mit der Struktureinheit der Formel (II) (b) und gegebenenfalls 0 bis 5,0 Gew.-% an anderen von a) und b) verschiedenen Stabilisatoren c).

Als Komponente (A) sind grundsätzlich alle PUR-Dispersionen des Standes der Technik geeignet. Die für die erfindungsgemäße Bindemittel-Zusammensetzung geeigneten PUR-Dispersionen (A) werden aus den Komponenten
A1) Polyisocyanate,
A2) polymere Polyole mit mittleren Molgewichten von 400 bis 6000,
A3) gegebenenfalls Mono- bzw. Polyalkohole oder Mono- bzw. Polyamine,
sowie mindestens eine Verbindung ausgewählt aus
A4) Verbindungen, die mindestens eine ionische oder potentiell ionische Gruppe aufweisen und/oder
A5) nichtionisch hydrophilierte Verbindungen,
aufgebaut

Eine potentiell ionische Gruppe ist im Sinne der Erfindung eine Gruppe, die zur Ausbildung einer ionischen Gruppe befähigt ist.

Bevorzugt enthalten die PUR-Dispersionen (A) 7 bis 45 Gew.-% A1), 50 bis 91 Gew.-% A2), 0 bis 15 Gew.-% A5), 0 bis 12 Gew.-% ionischer oder potentiell ionischer Verbindungen A4) sowie gegebenenfalls 0 bis 30 Gew.-% von Verbindungen A3), wobei sich die Summe der Komponenten zu 100 Gew.-% addiert und die Summe der Komponenten A4) und A5) ungleich 0 sein muss.

Besonders bevorzugt enthalten die PUR-Dispersionen (A) 10 bis 30 Gew.-% A1), 65 bis 90 Gew.-% A2), 0 bis 10 Gew.-% A5), 3 bis 9 Gew.-% ionischer oder potentiell ionischer Verbindungen A4) sowie gegebenenfalls 0 bis 10 Gew.-% von Verbindungen A3), wobei sich die Summe der Komponenten zu 100 Gew.-% addiert.

Ganz besonders bevorzugt enthalten die PUR-Dispersionen (A) 8 bis 27 Gew.-% A1), 65 bis 85 Gew.-% A2), 0 bis 8 Gew.-% A5), 3 bis 8 Gew.-% ionischer oder potentiell ionischer Verbindungen A4) sowie gegebenenfalls 0 bis 8 Gew.-% von Verbindungen A3), wobei sich die Summe der Komponenten zu 100 Gew.-% addiert.

Geeignete Diisocyanate (A1) sind grundsätzlich solche des Molekulargewichtsbereichs 140 bis 400 mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'-und 4,4'-Diisocyanatodiphenylmethan, 1,5-Diisocyanatonaphthalin oder beliebige Gemische solcher Düsocyanate.

Bevorzugt handelt es sich um Polyisocyanate oder Polyisocyanatgemische der genannten Art mit ausschließlich aliphatisch und/oder cycloaliphatisch gebundenen Isocyanatgruppen. Ganz besonders bevorzugte Ausgangskomponenten (A1) sind Polyisocyanate bzw. Polyisocyanatgemische auf Basis von HDI, IPDI und/oder 4,4'-Diisocyanatodicyclohexylmethan.

Weiterhin geeignet als Polyisocyanate (A1) sind beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Iminooxadiazindion- und/oder Oxadiazintrionstruktur, wie sie beispielsweise in J. Prakt. Chem. 336 (1994) S. 185 - 200 beschrieben sind.

Die polymeren Polyole (A2) in dem Molgewichtsbereich von 400 bis 6000 sind die üblichen wie sie für Polyurethane bereits seit langem eingesetzt werden, mit einer OH-Funktionalität von mindestens 1,8 bis 4, wie zum Beispiel Polyacrylate, Polyester, Polylactone, Polyether, Polycarbonate, Polyestercarbonate, Polyacetale, Polyolefine und Polysiloxane. Bevorzugt sind Polyole in einem Molgewichtsbereich von 600 bis 2500 mit einer OH-Funktionalität von 2 bis 3.

Die in Frage kommenden Hydroxylgruppen aufweisenden Polycarbonate sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2-und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Bevorzugt enthält die Diolkompomponente 40 bis 100 Gew.-% Hexandiol, bevorzugt 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß der DE-A 17 70 245 oder durch Veretherung von Hexandiol mit sich selbst zum Di- oder Trihexylenglykol erhalten wurden. Die Herstellung solcher Derivate ist z.B. aus der DE-A 15 70 540 bekannt. Auch die in der DE-A 37 17 060 beschriebenen Polyether-Polycarbonatdiole können eingesetzt werden.

Die Hydroxylpolycarbonate sollten im wesentlichen linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit, und Sorbit, Methylglykosid, 1,3,4,6-Dianhydrohexite.

Als Polyetherpolyole geeignet sind die in der Polyurethanchemie an sich bekannten Polytetramethylenglykolpolyether, die z.B. über Polymerisation von Tetrahydrofuran durch kationische Ringöffnung hergestellt werden können.

Darüber hinaus geeignete Polyetherpolyole sind Polyether, wie z.B. die unter Verwendung von Startermolekülen hergestellten Polyole aus Styroloxid, Propylenoxid, Butylenoxide oder Epichlorhydrins, insbesondere des Propylenoxids.

Als Polyesterpolyole geeignet sind z.B. Umsetzungsprodukte von mehrwertigen, bevorzugt zweiwertigen und gegebenenfalls zusätzlich dreiwertigen Alkoholen mit mehrwertigen, bevorzugt zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Für die Terminierung des Polyurethan-Prepolymers geeignete Komponenten (A3) kommen monofunktionelle Alkohole und Monoamine in Betracht. Bevorzugte Monoalkohole sind aliphatische Monoalkohole mit 1 bis 18 C-Atomen, wie z.B. Ethanol, n-Butanol, Ethylenglykol-monobutylether, 2-Ethylhexanol, 1-Octanol, 1-Dodecanol oder 1-Hexadecanol. Bevorzugte Monoamine sind aliphatische Monoamines, wie z.B. Diethylamin, Dibutylamin, Ethanolamin, N-Methylethanolamin oder N,N-Diethanolamin.

Ebenfalls als Komponente (A3) sind Polyole, Aminopolyole oder Polyamine mit einem Molgewicht unter 400 geeignet, die in der entsprechenden Literatur in großer Zahl beschrieben sind.

Bevorzugte Komponenten (A3) sind beispielsweise:
a) Alkandiole, wie Ethandiol, 1,2- und 1,3-Propandiol, 1,4- und 2,3-Butandiol, 1,5-Pentandiol, 1,3 Dimethylpropandiol, 1,6-Hexandiol, Neopentylglykol, Cyclohexandimethanol, 2-Methyl-1,3-propandiol,
b) Etherdiole, wie Diethylendiglykol, Triethylenglykol oder Hydrochinondihydroxyethylether,
c) Esterdiole der allgemeinen Formeln (III) und (IV),

   HO-(CH₂)ₓ-CO-O-(CH₂)_{y}-OH (III)

   HO-(CH₂)ₓ-O-CO-R-CO-O(CH₂)ₓ-OH (IV)

   in welchen
   - R: ein Alkylen- oder Arylenrest mit 1 bis 10 C-Atomen, bevorzugt 2 bis 6 C-Atomen,
   - x: 2 bis 6 und
   - y: 3 bis 5 ist,
   wie z.B. α-Hydroxybutyl-ε-hydroxy-capronsäureester, ω-Hydroxyhexyl-γ-hydroxybutter-säureester, Adipinsäure-(β-hydroxyethyl)ester und Terephthalsäurebis(β-hydroxy-ethyl)ester und
d) Polyamine wie Ethylendiamin, 1,2- und 1,3-Diaminopropan, 1,4-Diaminobutan, 1,6-Diaminohexan, Isophorondiamin, Isomerengemisch von 2,2,4-und 2,4,4-Trimethylhexa-methylendiamin, 2-Methyl-pentamethylendiamin, Diethylen-triamin, 1,3- und 1,4-Xylylendiamin, α,α,α',α'-Tetramethyl-1,3- und -1,4-xylylendiamin und 4,4-Diaminodicyclohexylmethan. Als Diamine im Sinne der Erfindung sind auch Hydrazin, Hydrazinhydrat und substituierte Hydrazine geeignet, wie z.B. N-Methylhydrazin, N,N'-Dimethylhydrazin und deren Homologe sowie Säuredihydrazide, Adipinsäure, β-Methyladipinsäure, Sebacinsäure, Hydracrylsäure und Terephthalsäure, Semicärbazidoalkylenhydrazide, wie z.B. β-Semicarbazidopropionsäurehydrazid (z.B. DE-A 17 70 591), Semicarbazidoalkylen-carbazinester, wie z.B. 2-Semicarbazidoethylcarbazinester (z.B. DE-A 19 18 504) oder auch Aminosemicarbazid-Verbindungen, wie z.B. β-Aminoethylsemicarbazido-carbonat (z.B. DE-A 19 02 931).

Geeignete ionische oder potentiell ionische Verbindungen (A4), sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Hydroxypivalinsäure, N-(2-Aminoethyl)-β-alanin, 2-(2-A,mino-ethylamino)-ethansulfonsäure, Ethylendiamin-propyl- oder Ethylendiaminbutylsulfonsäure, 1,2- oder 1,3-Propylendiamin-β-ethylsulfonsäure, Lysin oder 3,5-Diaminobenzoesäure. Ebenfalls geeignet ist das Hydrophilierungsmittel gemäß Beispiel 1 aus der EP-A 0 916 647 und deren Alkali- und/oder Ammoniumsalze, das Addukt von Natriumbisulfit an Buten-2-diol-1,4, Polyethersulfonat, das propoxylierte Addukt aus 2-Butendiol und NaHSO₃ (z.B. in der DE-A 24 46 440, Seite 5-9) sowie in kationische Gruppen überführbare Bausteine wie N-Methyl-diethanolamin können als hydrophile Aufbaukomponenten verwendet werden.

Bevorzugte ionische oder potentielle ionische Verbindungen (A4) sind solche, die über Carboxy- und/oder Carboxylat- und/oder Sulfonatgruppen und/oder Ammoniumgruppen verfügen. Besonders bevorzugte ionische Verbindungen (A4) sind solche, die Carboxylat- und/oder Sulfonatgruppen als ionische oder potentiell ionische Gruppen enthalten, wie die Salze von N-(2-Aminoethyl)-β-alanin, 2-(2-Amino-ethylamino)-ethansulfonsäure oder des Hydrophilierungsmittels gemäß Beispiel 1 aus der EP-A 0 916 647 sowie der Dimethylolpropionsäure.

Bevorzugt enthalten die PUR-Dispersionen (A) eine Kombination aus nichtionischen und ionischen Hydrophilierungsmitteln. Besonders bevorzugt sind Kombinationen aus nichtionischen und anionischen Hydrophilierungsmitteln.

Die unter den Komponenten (A2), (A3) und (A4) fallenden Hydroxy-Komponenten können Doppelbindungen enthalten, die z.B. aus langkettigen aliphatischen Carbonsäuren oder Fettalkoholen stammen können. Eine Funktionalisierung mit olefinischen Doppelbindungen ist beispielsweise durch den Einbau allylischer Gruppen oder von Acrylsäure oder Methacrylsäure sowie deren jeweiligen Estern möglich.

Weiterhin können die Polyurethandispersionen (A) nichtionisch hydrophile Verbindungen (A5), z.B. Polyoxyalkylenether mit mindestens einer Hydroxy- oder Aminogruppe, enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 3, aber auch Verbindungen der allgemeinen Formel (V), 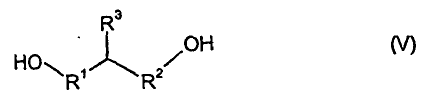 in welcher
- R¹ und R²: unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
- R³: für einen nicht-hydroxytenninierten Polyester oder bevorzugt. Polyether steht. Besonders bevorzugt steht R³ für einen alkoxyterminierten Polyethylenoxidrest.

Die Herstellung der wässrigen Polyurethan-Dispersionen (A) erfolgt in der aus dem Stand der Technik bekannten Art. Die Polyisocyanatkomponente mit polymerem Polyol und niedermolekularen Kettenverlängerern wird zu einem Polyurethan ausreagiert, wobei gegebenenfalls ein Lösungsmittel mitverwendet wird, das später wieder abgetrennt werden kann. Als Lösemittel geeignet sind die an sich bekannten üblichen Lacklösemittel, wie z.B. Ethylacetat, Butylacetat, 1-Methoxypropyl-2-acetat, 3-Methoxy-n-butylacetat, Aceton, 2-Butanon, 4-Methyl-2 pentanon, Cyclohexanon, Toluol, Xylol, Chlorbenzol, Testbenzin, Mischungen, die vor allem höher substituierte Aromaten enthalten, wie sie beispielsweise unter den Bezeichnungen Solvent Naphtha, Solvesso® (Exxon Chemicals, Houston, USA), Cypar® (Shell Chemicals, Eschborn, DE), Cyclo Sol® (Shell Chemicals, Eschborn, DE), Tolu Sol® (Shell Chemicals, Eschborn, DE), Shellsol® (Shell Chemicals, Eschborn, DE) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton, ε-Methylcaprolacton, Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel. Bevorzugte Lösemittel sind Aceton, 2-Butanon und N-Methylpyrrolidon. Besonders bevorzugt ist Aceton.

In einem weiteren Schritt werden gegebenenfalls anschließend zur Neutralisation befähigte Gruppen in die Salzform überführt und in die wässrige Phase überführt. Je nach Neutralisationsgrad und Gehalt ionischer Gruppen kann die Dispersion sehr feinteilig eingestellt werden, so dass sie praktisch das Aussehen einer Lösung hat, aber auch sehr grobteilige Einstellungen sind möglich, die ebenfalls ausreichend stabil sind:

Bevorzugt sind jedoch mittlere Teilchengrößen Von kleiner 300 nm, da diese die Emulgierung eines Polyisocyanats und damit die Qualität des Lackfilms verbessert. Der Feststoffgehalt kann in Grenzen 10 bis 70 Gew.-% variiert werden.

Die erfindungsgemäßen Bindemittel-Zusammensetzungen sind bevorzugt aufgebaut aus PUR-Dispersionen (A), die nach dem literaturbekannten Acetonverfahren hergestellt worden sind.

Überschüssige Isocyanatgruppen können dann durch Umsetzung mit polyfunktionellen isocyanatreaktiven Verbindungen (A3) zur Reaktion gebracht werden. Hierzu werden bevorzugt Wasser oder die bereits unter (A3) genannten Polyamine, besonders bevorzugt Di- sowie Triamine, Hydrazin und das Natriumsalz der 2-(2-Amino-ethylamino)-ethansulfonsäure eingesetzt. Auch die Terminierung mit einem Monoamin wie z.B. Diethylamin, Dibutylamin, Ethanolamin, N-Methylethanolamin oder N,N-Diethanolamin ist möglich.

Gegebenenfalls verwendete Lösemittel können anschließend destillativ entfernt werden.

Weiterhin ist es möglich, die erfindungsgemäßen Bindemittel-Zusammensetzungen durch Polyacrylate zu modifizieren. Hierzu wird in Gegenwart der Polyurethan-Dispersion (A) eine Emulsionspolymerisation von olefinisch ungesättigten Monomeren, z.B. Estern aus (Meth)acrylsäure und Alkoholen mit 1 bis 18 C-Atomen, Styrol, Vinylestern oder Butadien durchgeführt, wie es zum Beispiel in der DE-A 19 53 348, EP-A 0 167 188, EP-A 0189 945 und EP-A 0 308 115 beschrieben ist.

Neben einer oder mehrere olefinische Doppelbindungen können die Monomeren auch funktionelle Gruppen wie Hydroxyl-, Epoxy-, Methylol- oder Acetoacetoxygruppen enthalten. Die Emulsionspolymerisation kann vor oder nach der Modifikation mit Komponente (B) erfolgen.

Die erfindungsgemäßen Zusammensetzungen enthalten ein Stabilisierungsmittelgemisch B), welches a) ein Amin mit der Struktureinheit der allgemeinen Formel (1), 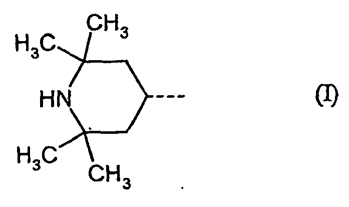 enthält. Geeignete Verbindungen a) sind solche, die mit einen 2,2,6,6-Tetramethylpiperidinyl-Rest, (HALS-Ring) aufweisen. Der Piperidinyl-Stickstoff des HALS-Ringes ist nicht substituiert und weist keinerlei Hydrazidstrukturen auf. Bevorzugte Verbindungen a) sind die in Tabelle 1 aufgeführten Verbindungen.

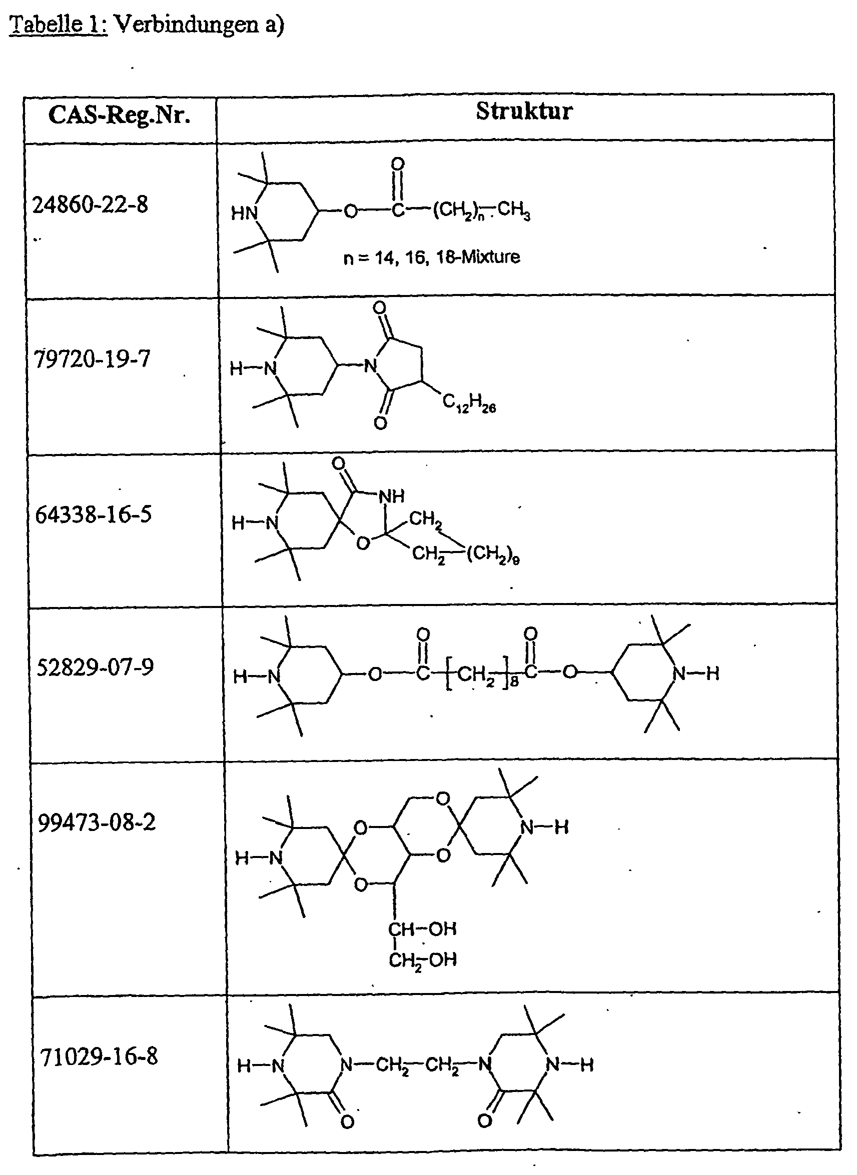

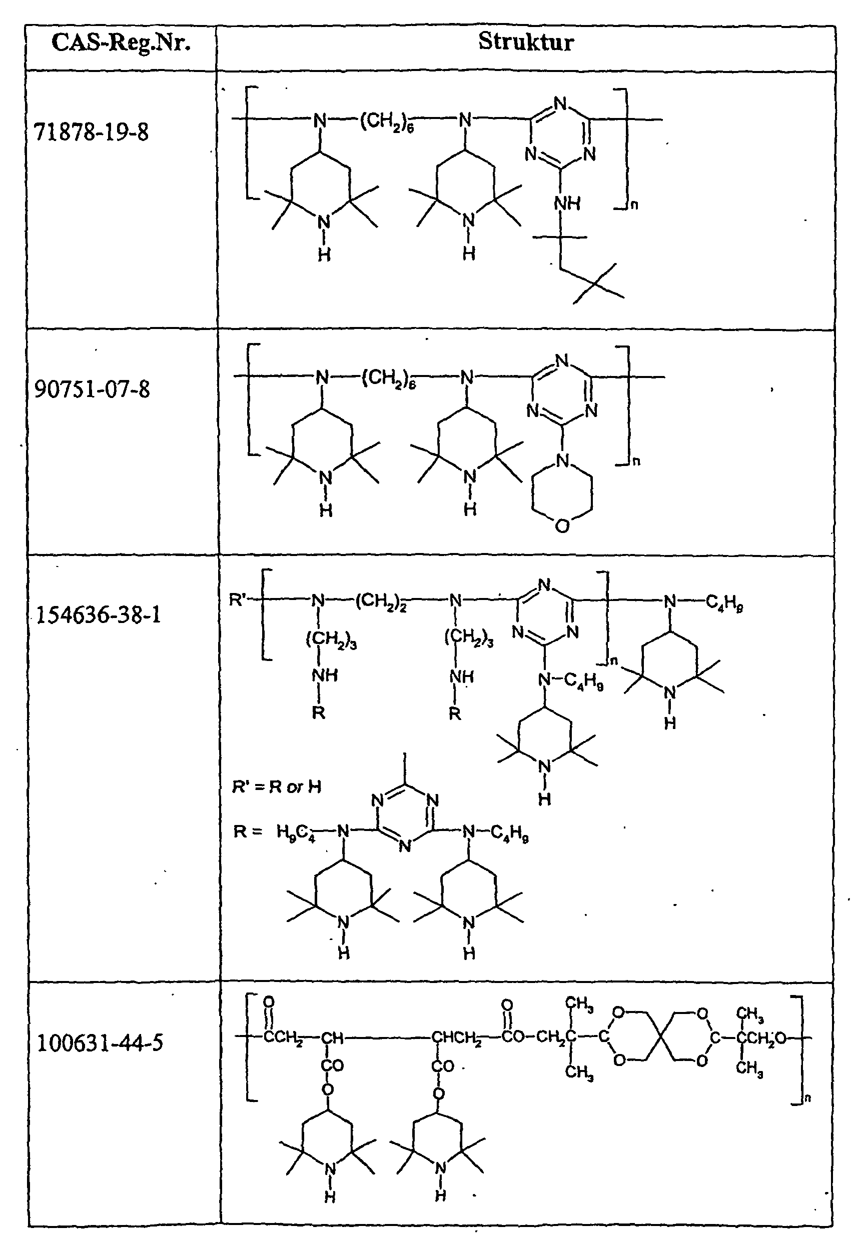

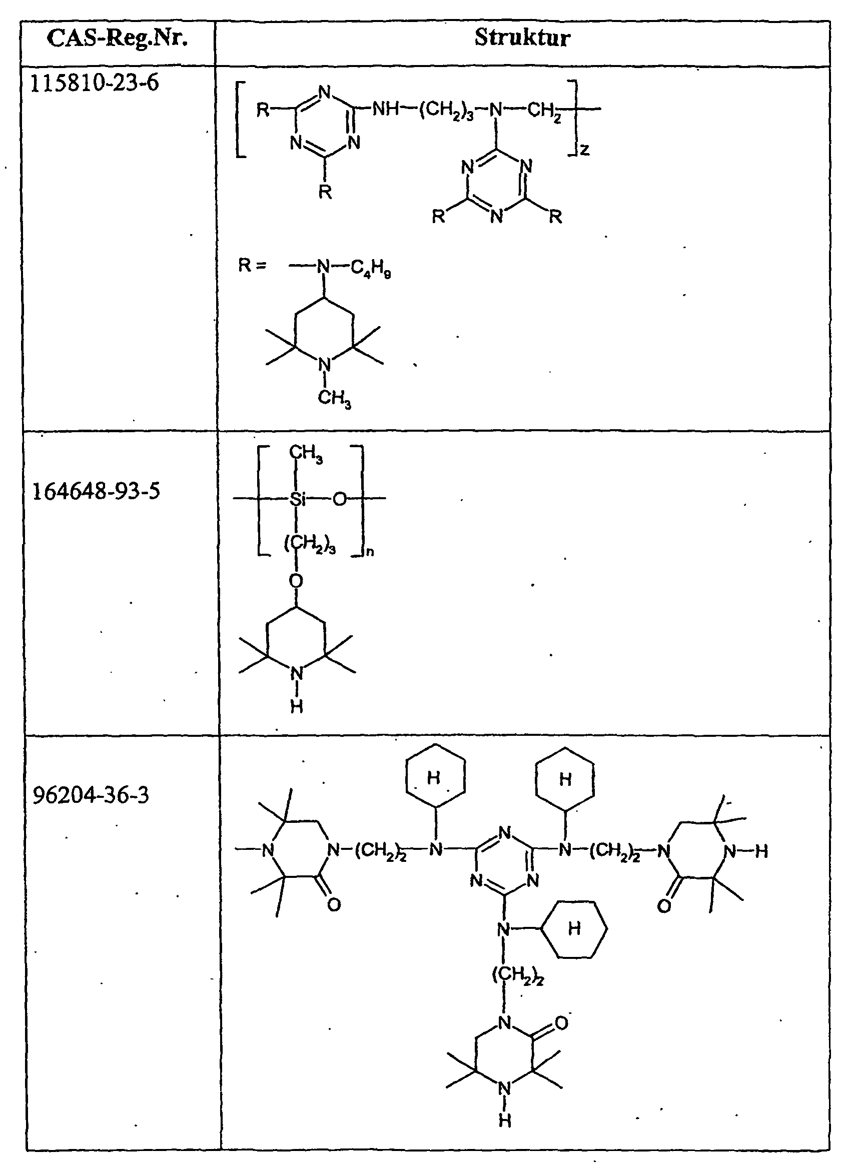

Besonders bevorzugt ist eine Verbindung der Formel (VI), die beispielsweise unter der Bezeichnung Tinuvin® 770 DF von der Firma Ciba Spezialitäten (Lampertheim, DE) vertrieben wird:

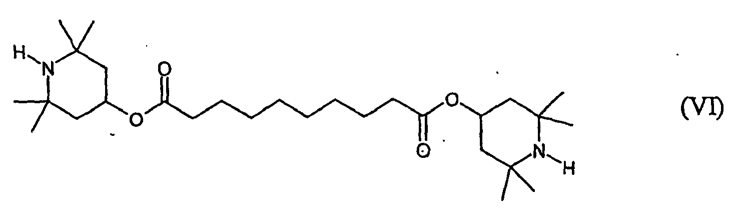

Das Stabilisierungsmittel B) der erfindungsgemäßen Zusammensetzungen enthält ebenfalls eine Verbindung b) der allgemeinen Formel (II)

-CO-NH-NH- (II).

Geeignete Verbindungen b) sind beispielsweise Säurehydrazide und -dihydrazide, wie z.B. Essigsäurehydrazid Adipinsäurehydrazid oder Adipinsäuredihydrazid oder auch Hydrazin-Addukte aus Hydrazin und cyclischen Carbonaten, wie sie beispielsweise in der EP-A 654 490 (S. 3, Zeile 48 bis S. 4 Zeile 3) genannt werden. Bevorzugt wird Adipinsäuredihydrazid oder ein Addukt aus 2 Mol Propylencarbonat und 1 Mo1 Hydrazin der allgemeinen Formel (VII), 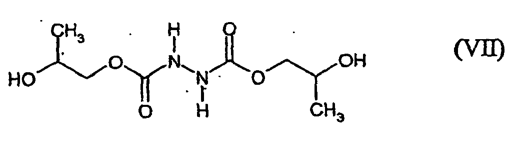 verwendet. Besonders bevorzugt ist das Addukt aus 2 Mol Propylencarbonat und 1 Mol Hydrazin der allgemeinen Formel (VII).

Geeignete Verbindungen c) sind z.B. Antioxidantien wie 2,6-Di-tert-butyl-4-methylphenol, UV-Absorber vom Typ 2-Hydroxyphenyl-benzotriazol oder Lichtschutzmittel vom Typ der am Stickstoffatom substituierten HALS-Verbindungen wie Tinuvin® 292 (Ciba Spezialitäten GmbH, Lampertheim, DE) oder andere handelsübliche Stabilisierungsmittel, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind. Bevorzugte Verbindungen c) sind die in Tabelle 2 angegebenen.

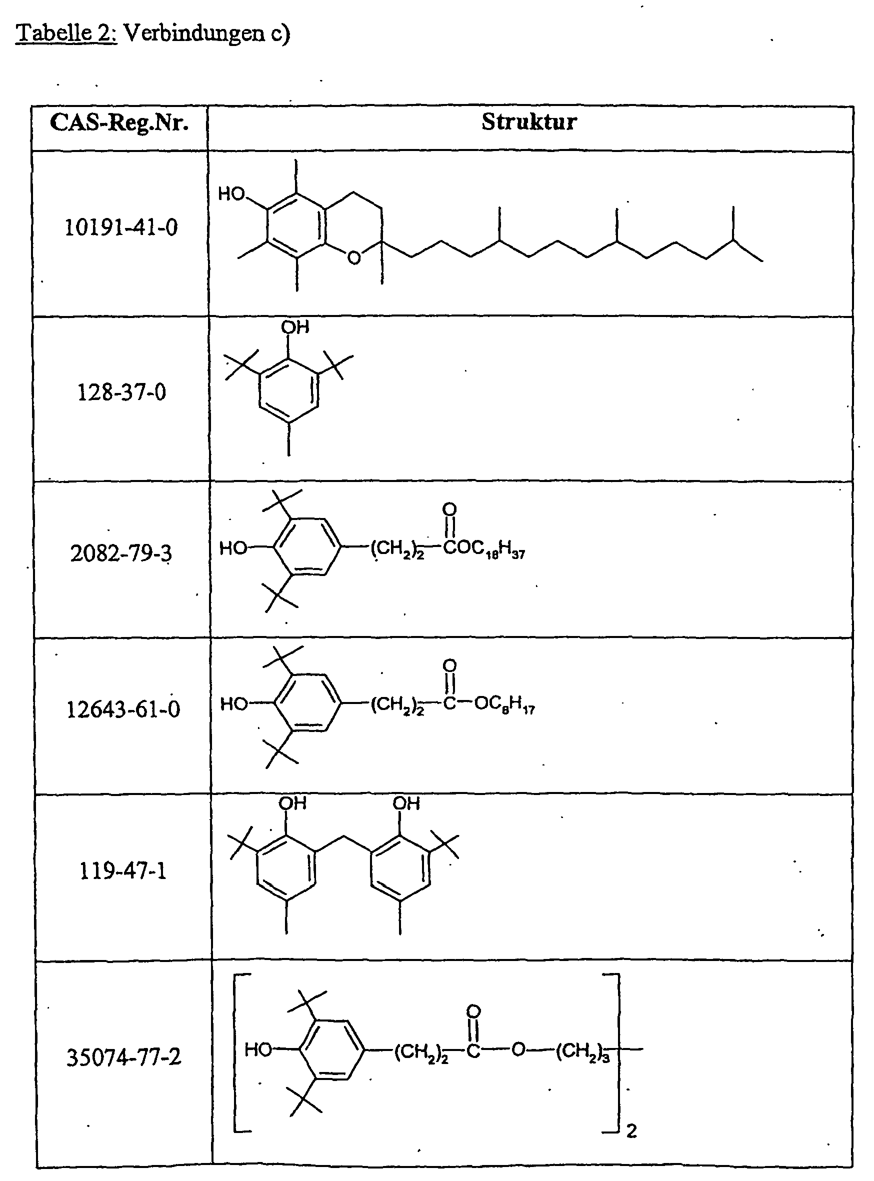

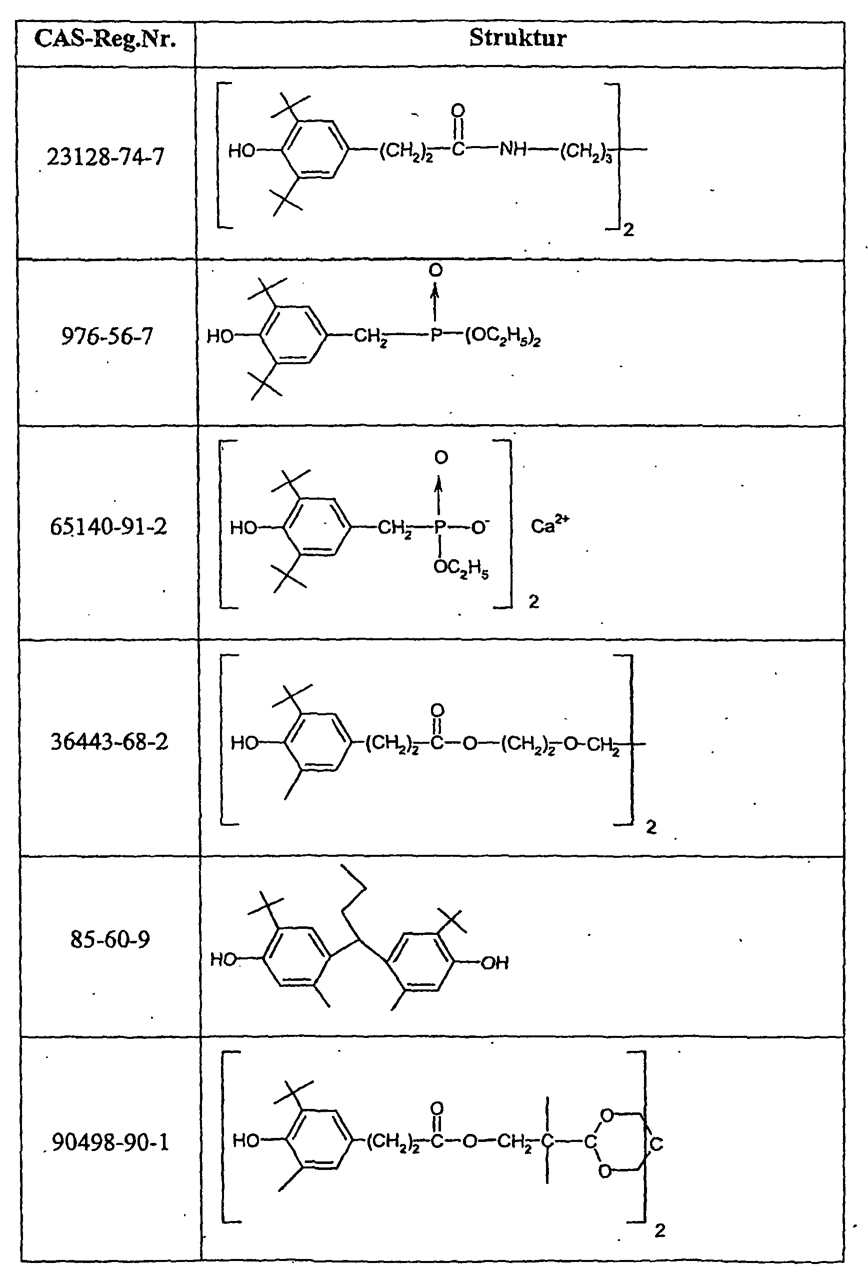

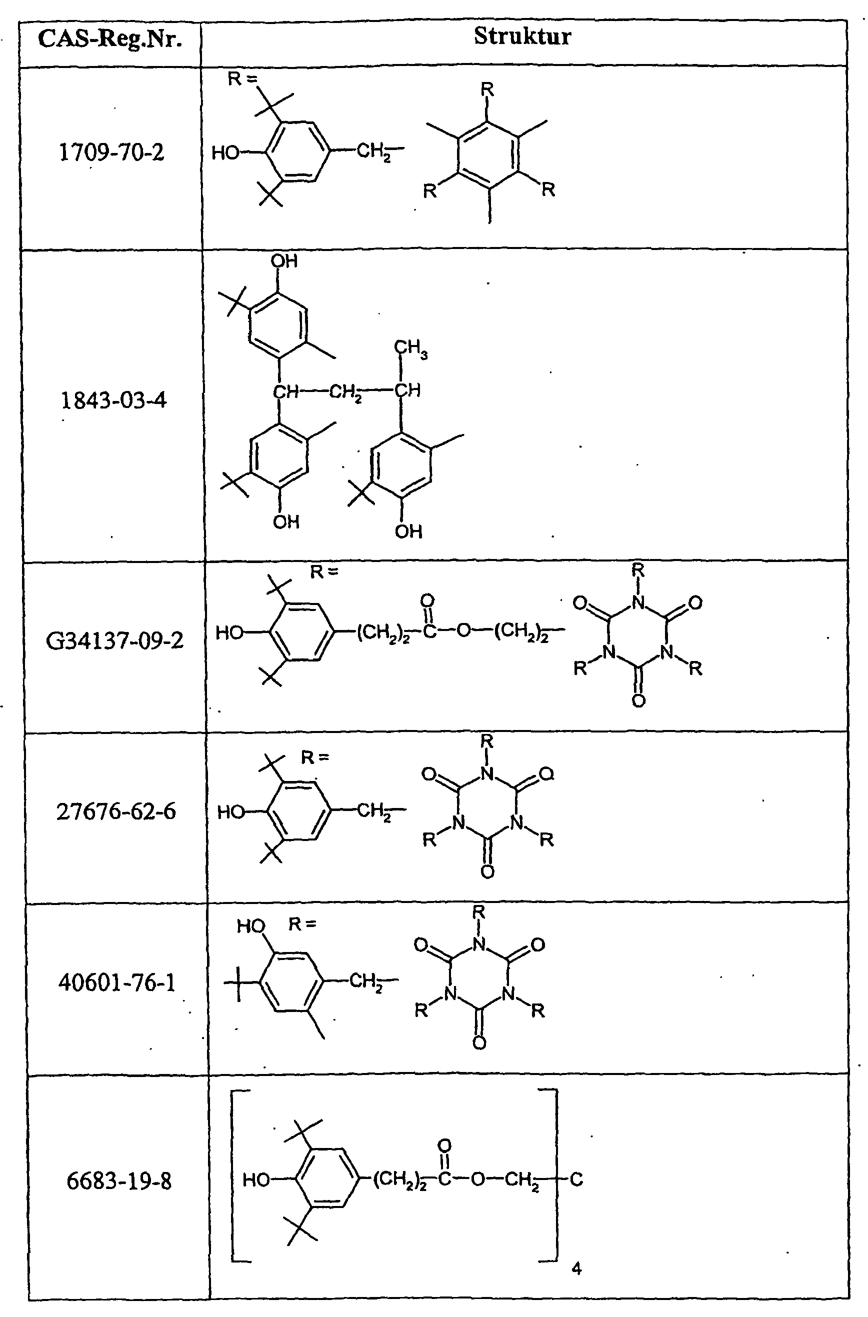

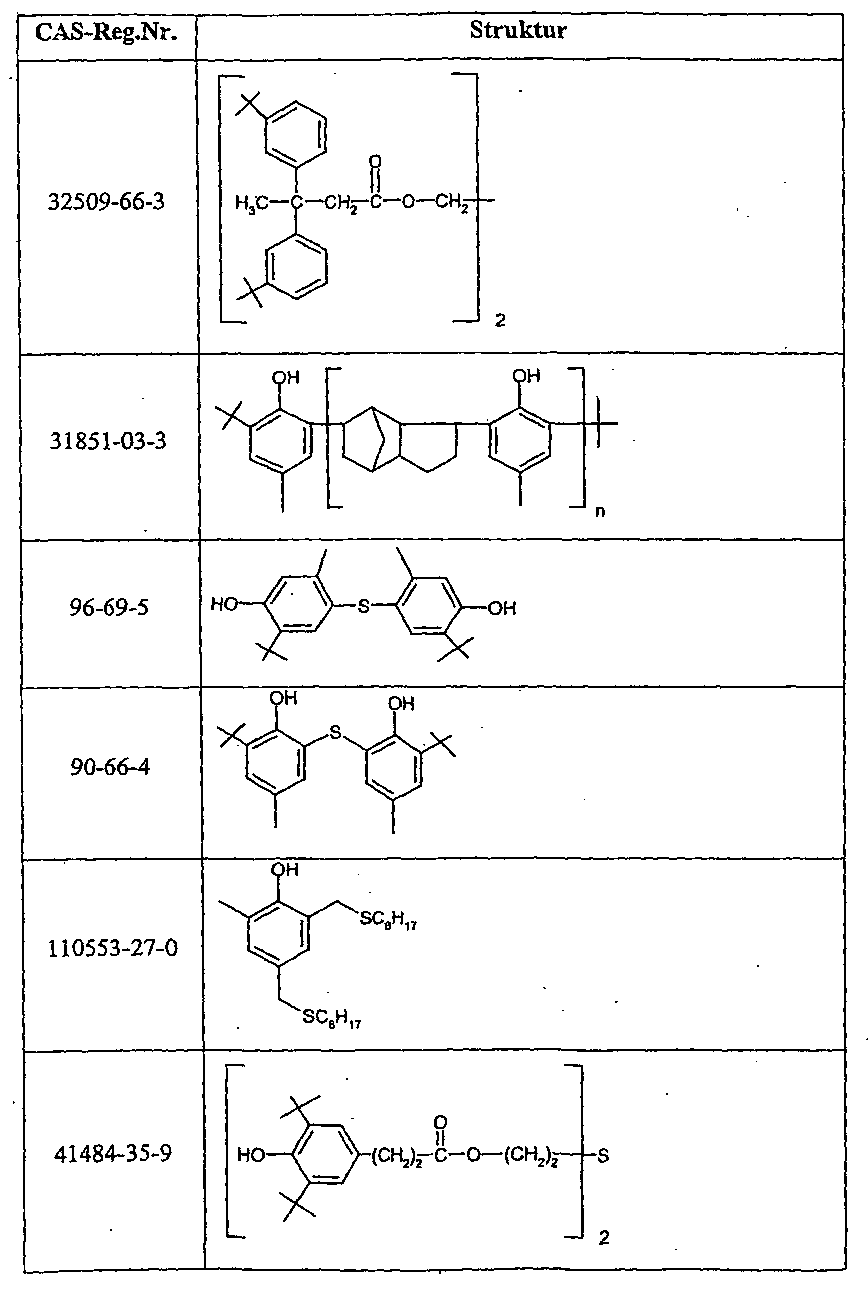

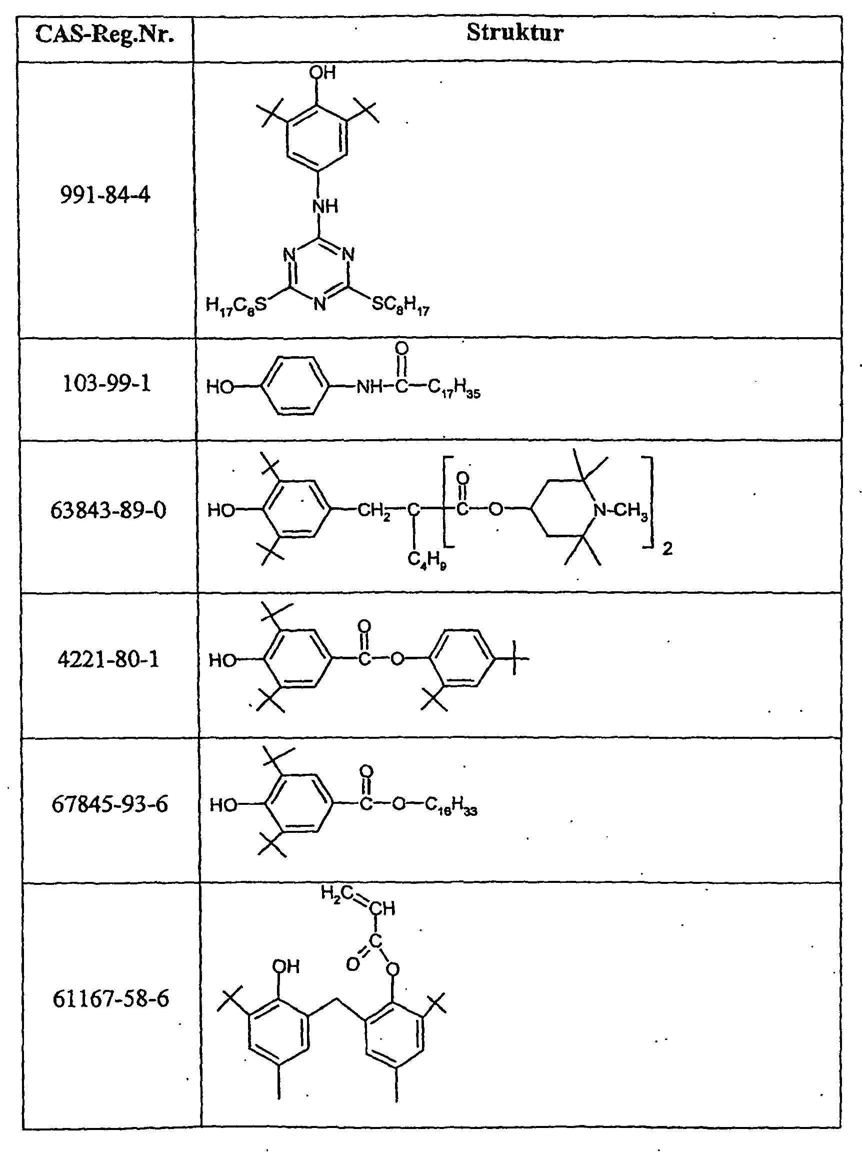

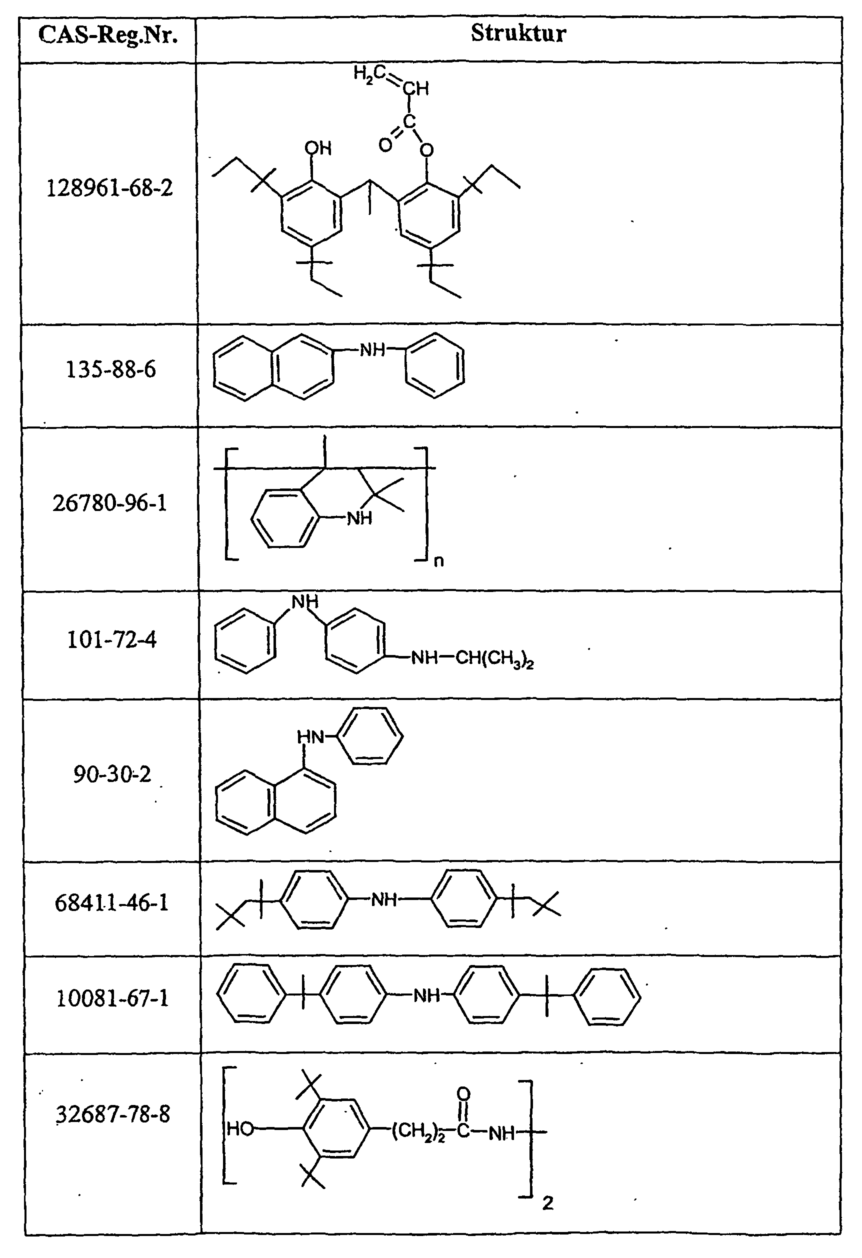

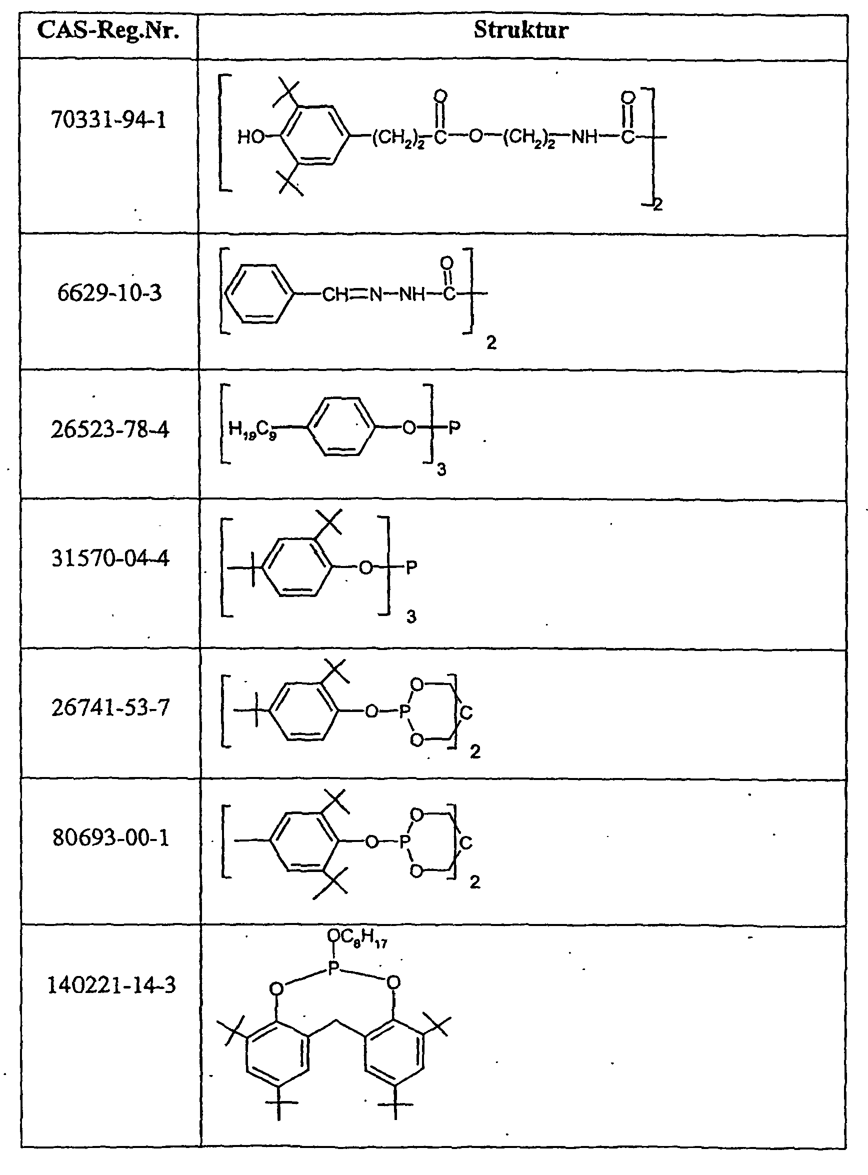

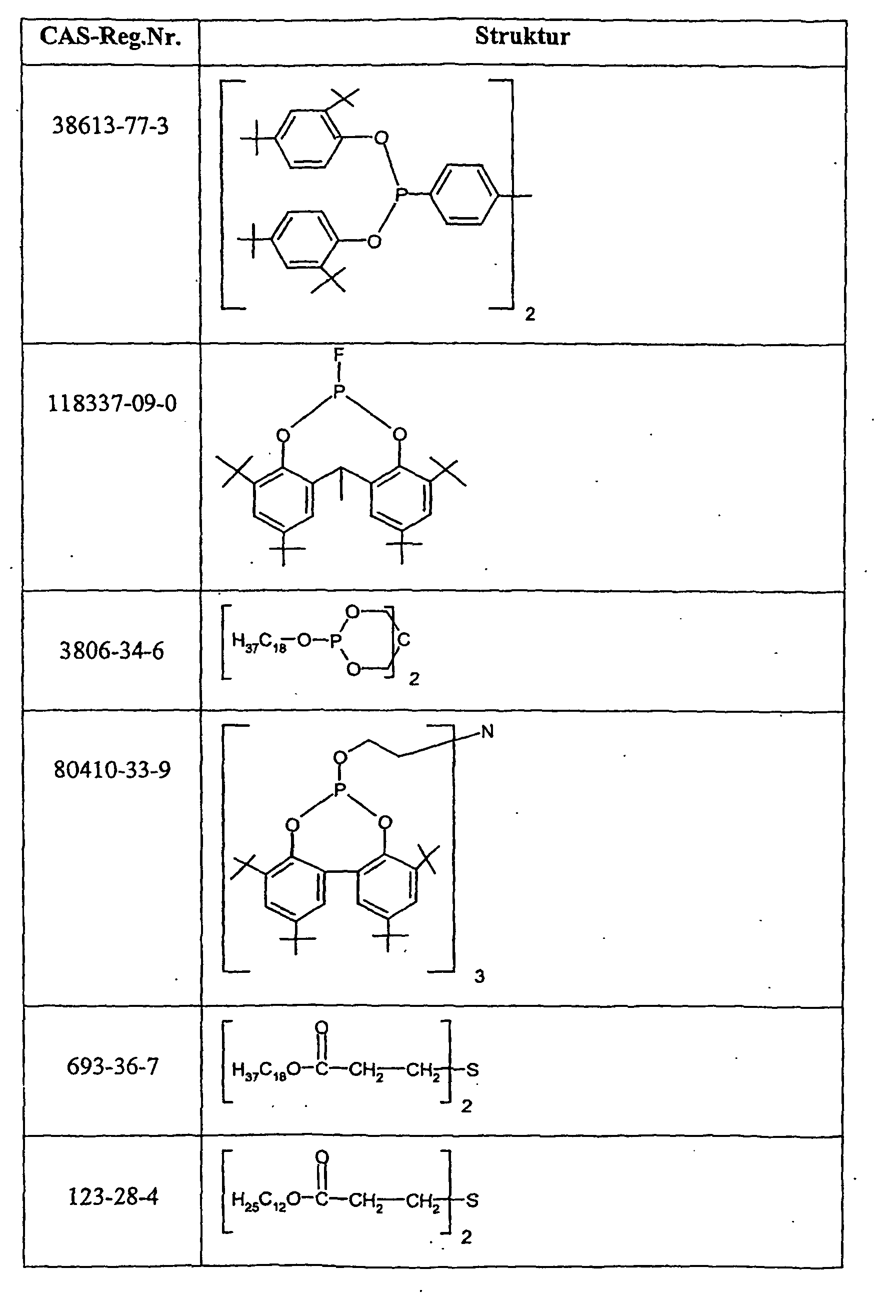

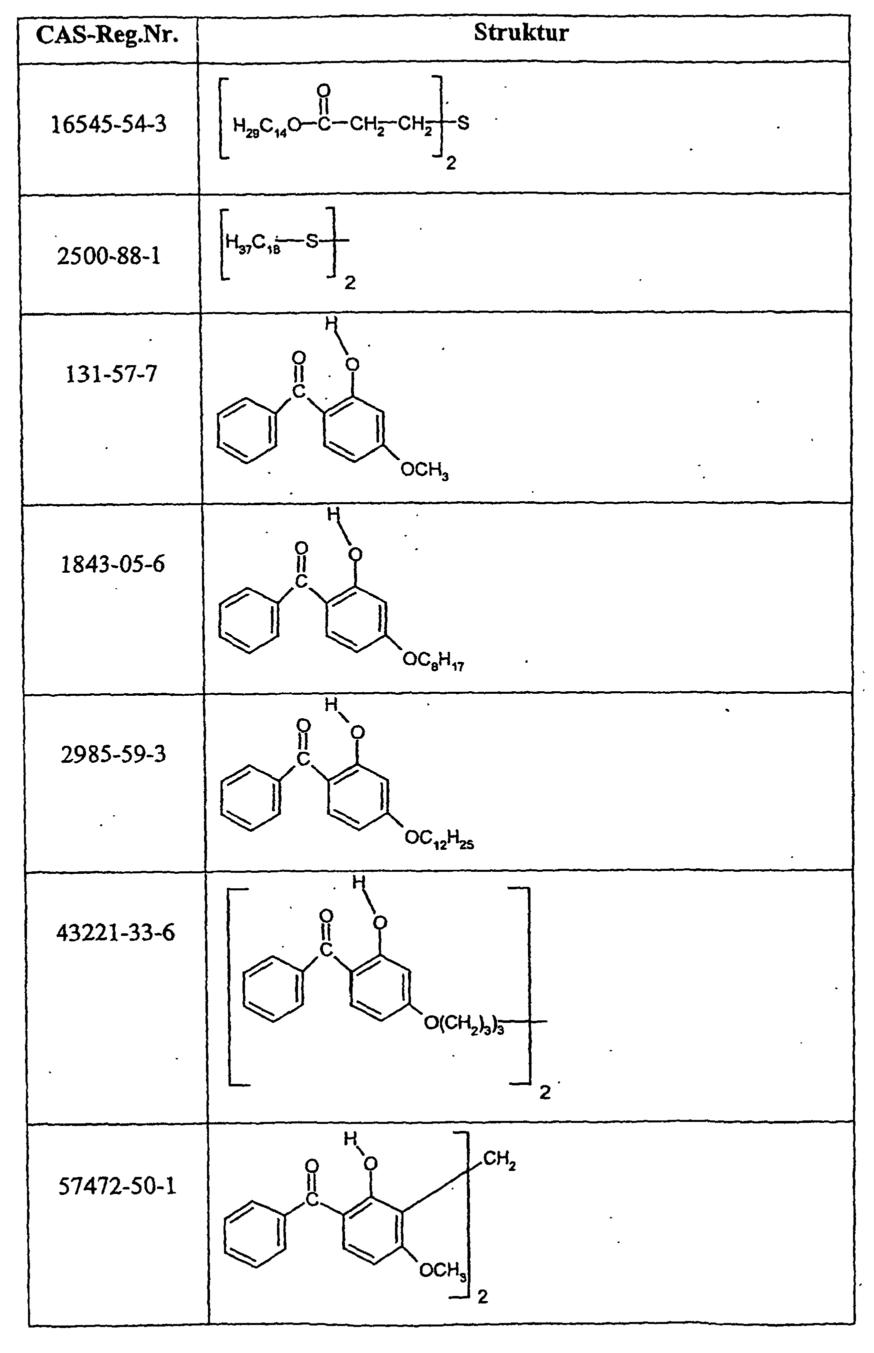

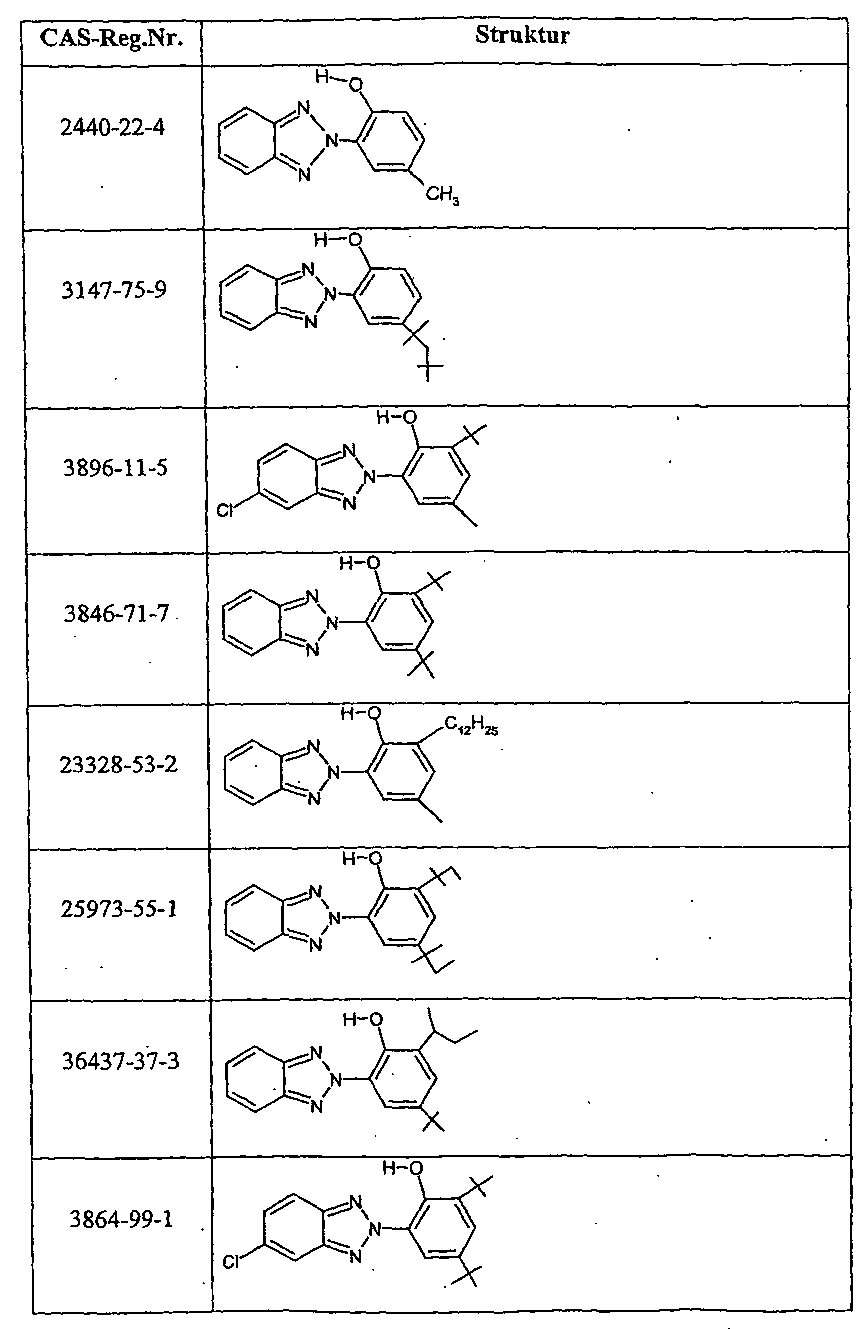

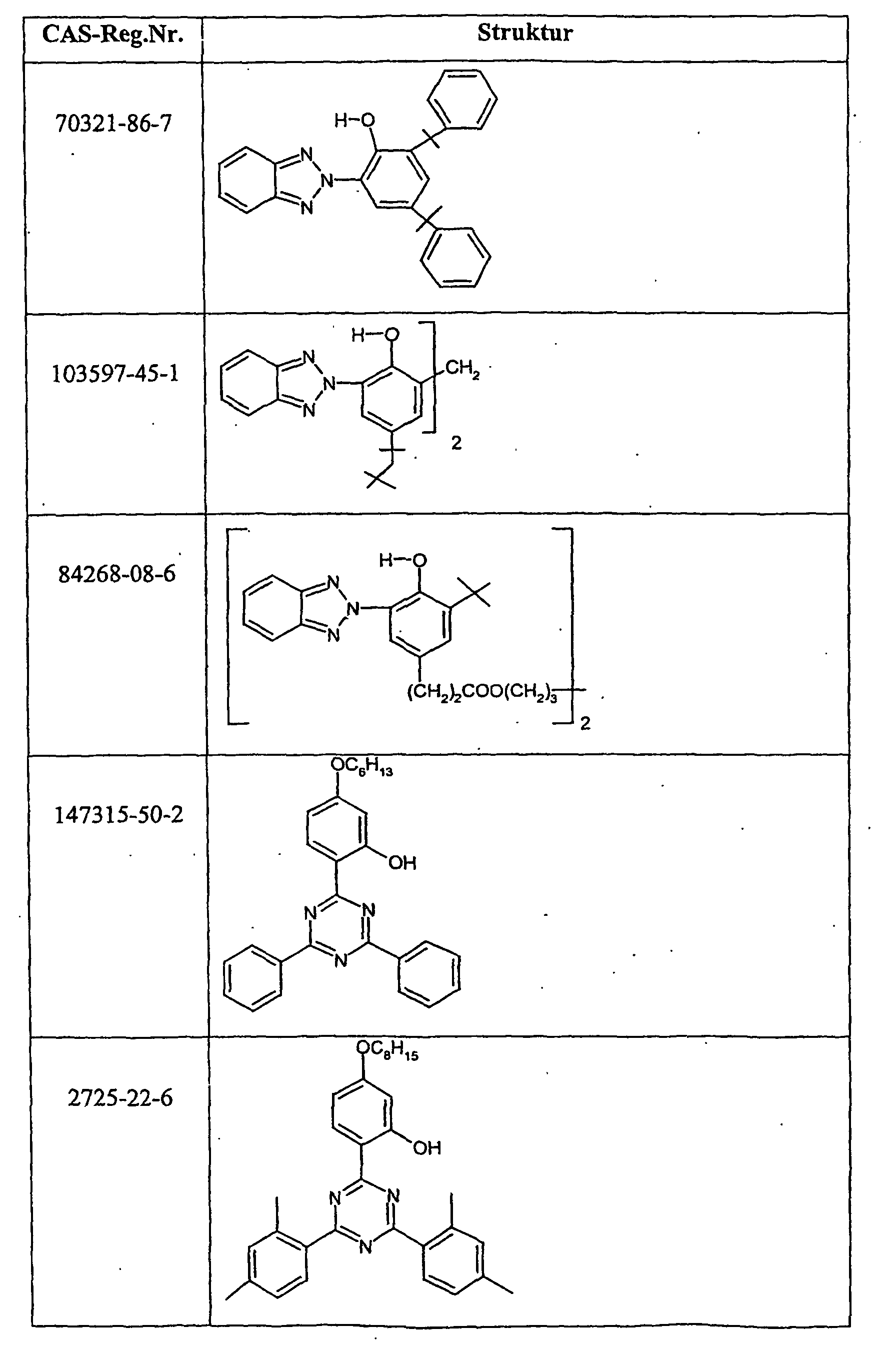

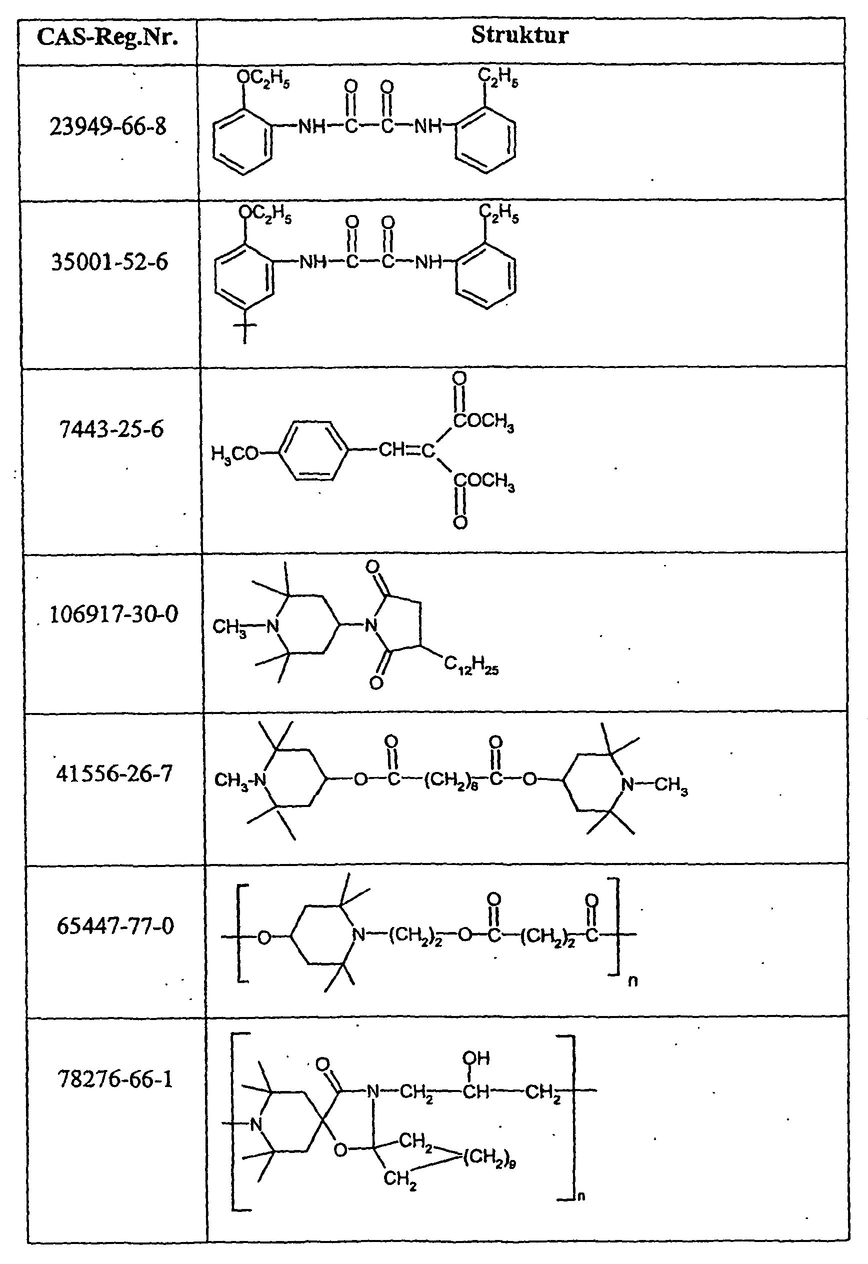

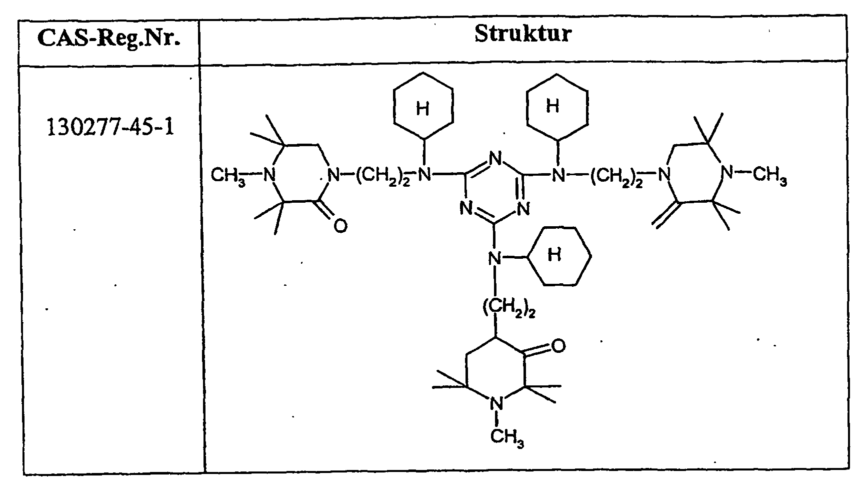

Die erfindungsgemäßen Bindemittel-Zusammensetzungen werden erhalten in dem die Komponente A1) mit den Komponenten A2), A3), A4), A5), a), b) und c) in beliebiger Reihenfolge gegebenenfalls unter zur Hilfenahme eines organischen Lösemittels umgesetzt werden. Hierzu ist die Verwendung aller dem Stand der Technik nach bekannten Methoden zur Darstellung von PUR-Dispersionen wie z.B. dem Emulgator-Scherkraft-, dem Aceton-, dem Prepolymer-Misch-, dem Schmelz-Emulgier-, dem Ketimin- und dem Feststoff-Spontan-Dispersgier-Verfahren oder Abkömmlingen davon möglich. Eine Zusammenfassung dieser Methoden findet sich in "Methoden der organischen Chemie" (Houben-Weyl, Erweiterungs- und Folgebände zur 4. Auflage, Band E20, H. Bartl und J. Falbe, Stuttgart, New York, Thieme 1987, S. 1617-1682).

Bevorzugt wird zunächst A1) mit den Komponenten A2), A5), a) und b), gegebenenfalls in Gegenwart eines Katalysators, umgesetzt. Das so hergestellte Prepolymer wird anschließend in einem Lösemittel, gegebenenfalls in Kombination mit den Komponenten b) und/oder c), gelöst und anschließend werden die Komponenten A3) und A4) zugegeben. Das so erhaltene, in einem Lösemittel gelöste hydrophilierte Prepolymer wird in einem weiteren Schritt durch Zugabe von Wasser in eine wässrige Dispersion oder Lösung überführt. Darüber hinaus besteht ebenfalls die Möglichkeit noch weitere Komponenten A3), A4) hinzuzufügen. Das verwendete organische Lösemittel kann im Anschluss an die Dispergierung destillativ entfernt werden.

Die erfindungsgemäßen Bindemittel-Zusammensetzungen weisen einen Festkörpergehalt von 10 bis 70 Gew.-% auf. Bevorzugt sind Feststoffgehalte von 20 bis 60 Gew.-%, besonders bevorzugt 25 bis 60 Gew.-%, wobei der Anteil an organischem Lösemittel an der Gesamtzusammensetzung bevorzugt kleiner 15 Gew.-% und besonders bevorzugt kleiner 5 Gew.-% ist.

Die erfindungsgemäßen Bindemittel-Zusammensetzungen werden entweder allein oder in Kombination mit anderen wässrigen Bindemitteln zur Herstellung von Beschichtungsmitteln eingesetzt. Solche wässrigen Bindemittel können z.B. aus Polyester-, Polyacrylat, Polybutadien-, Polyvinyacetat-, Polyepoxid- oder anderen Polyurethanpolymeren aufgebaut sein. Auch die Kombination mit strahlenhärtbaren Bindemitteln, wie sie z. B. in der EP-A-0 753 531 beschrieben sind, ist möglich.

Ebenfalls Gegenstand der vorliegenden Erfindung ist ein Beschichtungsmittel enthaltend die erfindungsgemäßen Bindemittel-Zusammensetzungen.

Gegenstand der Erfindung ist weiterhin ein Verfahren zur Herstellung von Beschichtungsmitteln, dadurch gekennzeichnet, dass die erfindungsgemäßen Bindemittel-Zusammensetzungen eingesetzt werden.

Beschichtungen auf Basis der erfindungsgemäßen Zusammensetzungen können auf beliebige Substrate aufgebracht werden, z.B. Metall, Holz, Glas, Glasfasern, Kohlefasern, Stein, keramische Mineralien, Beton, harte und flexible Kunststoffe der verschiedensten Arten, gewebten und nicht gewebten Textilien, Leder, Papier, Hartfasern, Stroh und Bitumen die vor der Beschichtung gegebenenfalls auch mit üblichen Grundierungen versehen werden können. Bevorzugte Substrate sind Glasfasern, Kohlefasern, Metalle, Textilien und Leder. Ein besonders bevorzugtes Substrat ist die Glasfaser.

Die erfindungsgemäßen Bindemittel-Zusammensetzungen können als solche oder in Kombination mit den aus der Lacktechnologie bekannten Hilfs- und Zusatzmitteln wie z.B. nichtionischen und/oder anionischen Verdickern, Füllstoffen, Pigmenten, Wachsen, Griffmitteln, Farbstoffen, Lösungsmitteln, Verlaufshilfsmitteln sowie Vernetzern zur Herstellung von Beschichtungen verwendet werden.

Weiterhin ist es möglich, vor der Applikation Vernetzer zuzusetzen. Hierfür geeignet sind bevorzugt hydrophile bzw. hydrophilierte Polyisocyanatvemetzer.

Der Auftrag der Beschichtungsmaterialien kann auf bekannte Weisen, z.B. durch Streichen, Gießen, Rakeln, Spritzen, Walzen oder Tauchen erfolgen. Die Trocknung des Lackfilms kann bei Raumtemperatur oder erhöhter Temperatur, aber auch durch Einbrennen bei bis zu 200°C erfolgen.

Die erfindungsgemäßen Bindemittel-Zusammensetzungen sind lager- und versandfähig und können zu einem beliebig späteren Zeitpunkt verarbeitet werden. Je nach der gewählten chemischen Zusammensetzung des Polyurethans erhält man Beschichtungen mit unterschiedlichen Eigenschaften. So können weiche klebrige Schichten, thermoplastische und gummielastische Produkte der verschiedensten Härtegrade bis zu glasharten Duroplasten erhalten werden. Somit können die erfindungsgemäßen Bindemittel-Zusammensetzungen auch als Klebestoffe verwendet werden, bevorzugt ist jedoch die Verwendung in Glasfaserschlichten.

Die erfindungsgemäßen Bindemittel-Zusammensetzungen können dabei in den Schlichtemitteln allein oder bevorzugt mit anderen Bindemitteln wie z.B. Polyacrylatdispersionen, Polyurethan-Polyacrylat-Hybriddispersionen, Polyvinylether- bzw. Polyvinylesterdispersionen, Polystyrol- bzw. Polyacrylnitrildispersionen, auch in Kombination mit Vemetzem wie blockierten Polyisocyanaten (Vernetzer) und Aminovernetzerharzen wie z.B. Melaminharzen eingesetzt werden.

Für die Herstellung der Schlichtemittel werden die erfindungsgemäßen Bindemittel-Zusammensetzungen als Bindemittelkomponenten eingesetzt und können weitere Komponenten wie Emulgatoren, weitere filmbildende Harze, Haftvermittler, Gleitmittel und Hilfsstoffe wie Netzmittel oder Antistatika enthalten. Die Haflvermittler, Gleitmittel und Hilfsstoffe, das Verfahren zur Herstellung der Schlichtemittel sowie das Verfahren der Beschlichtung von Glasfasern und die Nachbearbeitung der Glasfasern sind bekannt und beispielsweise in K.L. Loewenstein "The Manufacturing Technology of. Continous Glass Fibres", Elsevier Scientific Publishing Corp., Amsterdam, London, New York, 1983, beschrieben.

Gegenstand der vorliegenden Erfindung sind auch Glasfasern beschlichtet mit einen Beschichtungsmittel enthaltend die erfindungsgemäßen Bindemittel-Zusammensetzungen.

Für die beschlichteten Glasfasern sind sowohl die für die Glasseidenfabrikation verwendeten, bekannten Glastypen wie E-, A-, C-, und S- Glas als auch die anderen an sich bekannten Erzeugnisse der Glasfaserhersteller geeignet. Unter den genannten Glastypen für die Herstellung von Endlosglasfasern besitzen die E-Glasfasern aufgrund ihrer Alkalifreiheit, hohen Zugfestigkeit und hohen Elastizitätsmodul die größte Bedeutung für die Verstärkung von Kunststoffen.

Als Matrixpolymere können sowohl thermoplastische als auch duromere Polymere verwendet werden.

### Beispiele:

### Eingesetzte Verbindungen:

### Diaminosulfonat:

### NH₂-CH₂CH₂-NH-CH₂CH₂-SO₃Na (45 % ig in Wasser)

### Bestimmung der Thermovergilbung:

Die unten aufgeführten Bindemittel-Zusammensetzungen werden auf Prüfbleche, die mit einem handelsüblichen, weißen Basislack, z.B. von der Fa. Spies & Hecker, beschichtet sind, in einer Naßschichtdicke von 120 µm appliziert. Die Prüfbleche werden 30 Minuten bei Raumtemperatur getrocknet und anschließend für 30 Minuten bei 170°C im Trockenschrank eingebrannt. Danach erfolgt die Farbmessung nach der CIELAB-Methode. Je größer hierbei der ermittelte positive b*-Wert ist, um so gelber hat sich die Beschichtung der Bindemittel-Zusammensetzung verfärbt.

### Beispiel 1: Vergleichsbeispiel

### PUR-Dispersion des Stands der Technik im Bereich Glasfaserschlichten

Baybond® PU 401 (Anionische-nichtionische PUR-Dispersion mit einem Festkörpergehalt von 40 % und einer mittleren Teilchengröße von 100-300 nm, Bayer AG, Leverkusen, DE)

### Beispiel 2: Vergleichsbeispiel

1377,0 g Polyester PE 170 HN (Bayer AG, Leverkusen, DE, Polyesterpolyol, OHZ = 66, Molgewicht 1700), 66,8 g Polyether LB 25 (Bayer AG, Leverkusen, DE, monofunktioneller Polyether auf Ethylenoxid-/Propylenoxidbasis mit einem mittleren Molgewicht von 2250 (OHZ = 25) und 0,1 g Desmorapid® Z (Bayer AG, Leverkusen, DE) werden auf 65°C aufgeheizt. Anschließend wird bei 65°C innerhalb von 5 min ein Gemisch aus 499,5 g Isophorondiisocyanat und 343,1 g Aceton zugegeben und solange unter Rückfluss gerührt bis der theoretische NCO-Wert erreicht ist. Das fertige Prepolymer wird mit 1760,4 g Aceton bei 50°C gelöst und anschließend eine Lösung aus 47,3 g Adipinsäuredihydrazid, 9,0 g Hydrazinhydrat, 21,4 g Isophorondiamin und 419,0 g Wasser innerhalb von 10 min zudosiert. Nach Zugabe von 189,9 g Diaminosulfonat lässt man 15 min nachrühren und dispergiert durch Zugabe von 2628,1 g Wasser innerhalb von 20 min. Es folgt die Entfernung des Lösemittels durch Destillation im Vakuum und man erhält eine lagerstabile Dispersion mit einem Festkörpergehalt von 40,5 %.

### Beispiel 3: Vergleichsbeispiel

1496,0 g Polyester PE 170 HN (Bayer AG, Leverkusen, DE, Polyesterpolyol, OHZ = 66, Molgewicht 1700), 54,0 g Polyether LB 25 (Bayer AG, DE, monofunktioneller Polyether auf Ethylenoxid-/Propylenoxidbasis mit einem mittleren Molgewicht von 2250 (OHZ = 25)) und 0,1 g Desmorapid® Z (Bayer AG, Leverkusen, DE) werden auf 65°C aufgeheizt. Anschließend wird bei 65°C innerhalb von 5 min ein Gemisch aus 444,4 g Isophorondiisocyanat und 352,0 g Aceton zugegeben und solange unter Rückfluss gerührt bis der theoretische NCO-Wert erreicht ist. Das fertige Prepolymer wird mit einer Lösung aus 16,0 g Irganox® 245 (Ciba Spezialitäten GmbH, Lampertheim, DE), 16,0 g Tinuvin® 770 DF (Ciba Spezialitäten GmbH, Lampertheim, DE) und 1671,1 g Aceton bei 50°C gelöst und anschließend eine Lösung aus 9,0 g Hydrazinhydrat, 19,0 g Isophorondiamin und 121,6 g Wasser innerhalb von 10 min zudosiert. Nach Zugabe von 168,8 g Diaminosulfonat lässt man 15 min nachrühren und dispergiert durch Zugabe von 2971,9 g Wasser innerhalb von 20 min. Es folgt die Entfernung des Lösemittels durch Destillation im Vakuum und man erhält eine lagerstabile Dispersion mit einem Festkörpergehalt von 40,4 %.

### Beispiel 4: erfindungsgemäß

1377,0 g Polyester PE 170 HN (Bayer AG, Leverkusen, DE, Polyesterpolyol, OHZ = 66, Molgewicht 1700), 60,8 g Polyether LB 25 (Bayer AG, Leverkusen, DE, monofunktioneller Polyether auf Ethylenoxid-/Propylenoxidbasis mit einem mittleren Molgewicht von 2250 (OHZ = 25)), und 44,6 g des oben genannten Hydrazin-Adduktes aus 1 Mol Hydrazinhydrat und 2 Mol Propylencarbonat vom Molekulargewicht 236 der Formel VII und 0,1 g Desmorapid® Z (Bayer AG, Leverkusen, DE) werden auf 65°C aufgeheizt. Anschließend wird bei 65°C innerhalb von 5 min ein Gemisch aus 499,5 g Isophorondiisocyanat und 349,8 g Aceton zugegeben und solange unter Rückfluss gerührt bis der theoretische NCO-Wert erreicht ist. Das fertige Prepolymer wird durch Zugabe einer Lösung aus 1880,0 g Aceton, 11,2 g Irganox® 245 (Ciba Spezialitäten GmbH, Lampertheim, DE) und 11,2 g Tinuvin® 770 DF (Ciba Spezialitäten GmbH, Lampertheim, DE) bei 50°C gelöst und anschließend eine Lösung aus 7,8 g Ädipinsäuredihydrazid, 9,0 g Hydrazinhydrat, 21,4 g Isophorondiamin und 136,6 g Wasser innerhalb von 10 min zudosiert. Nach Zugabe von 189,9 g Diaminosulfonat lässt man 15 min nachrühren und dispergiert durch Zugabe von 2942,7 g Wasser innerhalb von 20 min. Es folgt die Entfernung des Lösemittels durch Destillation im Vakuum und man erhält eine lagerstabile Dispersion mit einem Festkörpergehalt von 40,8 %.

**Tabelle 3:**

| | **Beispiel 1** | **Beispiel 2** | **Beispiel 3** | **Beispiel 4** |
|---|---|---|---|---|
| | Baybond® PU 401 (Vergleichsbeispiel, Stand der Technik) | (Vergleichsbeispiel) | (Vergleichsbeispiel) | (erfindungsgemäß) |
| **Festkörper [%]** | 40 % | 40,5 | 40,4 | 40,8 |
| **mittlere Teilchengröße [nm]** | 100-300 nm | 161,0 | 165,5 | 162,7 |
| **Verbindung der Formel VII** | - | - | - | X |
| **Tinuvin 770 DF** | - | - | X | X |
| **Adipinsäuredihydrazid** | - | X | - | X |
| **CIE/LAB b*-Werte** | 1,3 | 0,5 | 0,9 | 0,0 |

Die in Tabelle 3 angeführten Ergebnisse belegen, dass die erfindungsgemäße PUR-Dispersion des Beispiels 4 im Vergleich zu PUR-Dispersionen des Standes der Technik (Beispiel 1) und herkömmlich stabilisierten PUR-Dispersionen (Beispiele 2 und 3) eine deutlich geringere Vergilbung aufzeigt.

## Patentansprüche

1. Bindemittel-Zusammensetzungen enthaltend
A) mindestens eine wässrige PUR-Dispersion,
B) mindestens ein Stabilisierungsmittel bzw. Stabilisierungsmittelgemisch enthaltend
a) mindestens ein Amin mit der Struktureinheit der allgemeinen Formel (I), 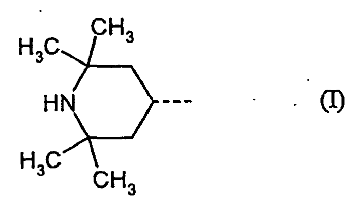 welches keine Hydrazidgruppen aufweist,
b) mindestens eine Verbindung mit der Struktureinheit der allgemeinen Formel (II),
-CO-NH-NH- (II)
sowie
c) gegebenenfalls eine von a) und b) verschiedene Stabilisierungskomponente.

2. Bindemittel-Zusammensetzungen enthaltend
A) mindestens eine wässrige PUR-Dispersion, enthaltend Struktureinheiten mindestens eines Stabilisierungsmittels bzw. Stabilisierungsmittelgemischs B) auf Basis
a) mindestens eines Amins der allgemeinen Formel (I), 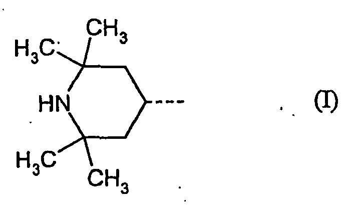 welches keine Hydrazidgruppen aufweist,
b) mindestens einer Verbindung der allgemeinen Formel (II),
-CO-NH-NH- (II)
sowie
c) gegebenenfalls einer von a) und b) verschiedene Stabilisierungskomponente.

3. Bindemittel-Zusammensetzung gemäß Anspruch 1 oder 2 enthaltend 78,0 bis 99,8 Gew.-% der Komponente A) und 0,2 bis 22,0 Gew.-% der Komponente B), wobei die Summe der Komponenten sich zu 100 % addieren und die Angaben sich auf den Festkörperanteil beziehen.

4. Bindemittel-Zusammensetzung gemäß Anspruch 1 oder 2 enthaltend 0,1 bis 11,0 Gew.-% Amine mit der Struktureinheit der Formel (I) (a), 0,1 bis 11,0 Gew.-%, an Hydraziden mit der Struktureinheit der Formel (II) (b) und gegebenenfalls 0 bis 5,0 Gew.-% an anderen von a) und b) verschiedenen Stabilisatoren c), wobei sich alle Angaben auf den Gesamtfeststoffgehalt beziehen.

5. Bindemittel-Zusammensetzung gemäß einem oder mehreren der Ansprüche 1 bis 4, **dadurch gekennzeichnet, dass** PUR-Dispersionen (A) aus den Komponenten
A1) Polyisocyanate,
A2) polymere Polyole mit mittleren Molgewichten von 400 bis 6000,
A3) gegebenenfalls Mono- bzw. Polyalkohole oder Mono- bzw. Polyamine,
sowie mindestens eine Verbindung ausgewählt aus
A4) Verbindungen, die mindestens eine ionische oder potentiell ionische Gruppe aufweisen und/oder
A5) nichtionisch hydrophilierte Verbindungen
aufgebaut sind.

6. Bindemittel-Zusammensetzung gemäß einem oder mehreren der Ansprüche 1 bis 5, **dadurch gekennzeichnet, dass** die PUR-Dispersionen (A) 7 bis 45 Gew.-% A1), 50 bis 91 Gew.-% A2), 0 bis 15 Gew.-% A5), 0 bis 12 Gew.-% A4) sowie gegebenenfalls 0 bis 30 Gew.-% A3) enthält, wobei die Summe der Komponenten sich zu 100 Gew.-% addiert und die Summe der Komponenten (A4) und (A5) ungleich 0 sein muss.

7. Bindemittel-Zusammensetzung gemäß einem oder mehreren der Ansprüche 1 bis 6, **dadurch gekennzeichnet, dass** das Amin a) eine Verbindung der Formel (VI), 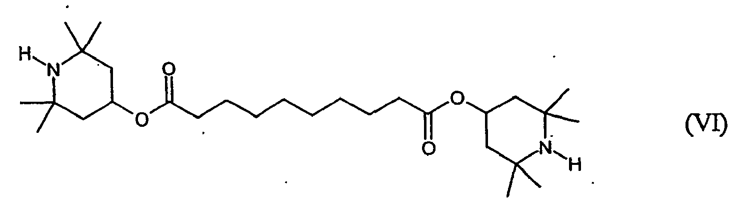 ist

8. Bindemittel-Zusammensetzung gemäß einem oder mehreren der Ansprüche 1 bis 7, **dadurch gekennzeichnet, dass** die Verbindung b) eine Verbindung der Formel (VII), 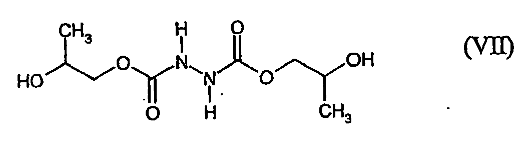 ist.

9. Verfahren zur Herstellung von Beschichtungsmitteln gemäß Anspruch 1 oder 2, **dadurch gekennzeichnet, dass** zunächst ein Prepolymer durch Umsetzung der Komponente A1) mit den Komponenten A2), A5), a) und b), gegebenenfalls in Gegenwart eines Katalysators, hergestellt wird, welches anschließend in einem Lösemittel, gegebenenfalls in Kombination mit den Komponenten b) und/oder c), gelöst wird, anschließend die Komponenten A3) und A4) zugegeben werden und in einem weiteren Schritt das so erhaltene Prepolymer durch Zugabe von Wasser in eine wässrige Dispersion oder Lösung überführt wird.

10. Verwendung der Bindemittel-Zusammensetzung gemäß Anspruch 1 oder 2 in Glasfaserschlichten.

11. Verwendung der Bindemittel-Zusammensetzung gemäß Anspruch 1 oder 2 in Klebstoffen.

12. Beschichtungsmittel enthaltend Bindemittel-Zusammensetzungen gemäß Anspruch 1 oder 2.

13. Glasfasern beschlichtet mit einer Schlichte enthaltend Bindemittel-Zusammensetzungen gemäß Anspruch 1 oder 2.

## Claims

1. Binder compositions containing
A) at least one aqueous PU dispersion and
B) at least one stabilizer or stabilizer mixture containing
a) at least one amine having the structural unit of the formula (I) 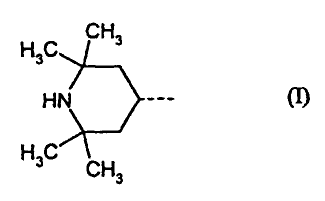 which has no hydrazide groups,
b) at least one compound having the structural unit of the general formula (II)
-CO-NH-NH- (II)
and
c) optionally a stabilizing component differing from a) and b).

2. Binder composition containing
A) at least one aqueous PU dispersion containing structural units or at least one stabilizer or stabilizer mixture B) based on
a) at least one amine of the general formula (I) 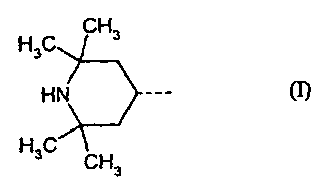 which has no hydrazide groups,
b) at least one compound of the general formula (II)
-CO-NH-NH- II)
and
c) optionally a stabilizer component differing from a) and b).

3. Binder composition according to Claim 1 or 2, containing 78.0 to 99.8% by weight of component A) and 0.2 to 22.0% by weight of component B), the sum of the components being 100% and the data being based on the solids content.

4. Binder composition according to Claim 1 or 2, containing 0.1 to 11.0% by weight of amines having the structural unit of the formula (I) (a), 0.1 to 11.0% by weight of hydrazides having the structural unit of the formula (II) (b) and optionally 0 to 5.0% by weight of other stabilizers c) differing from a) and b), all data being based on the total solids content.

5. Binder composition according to one or more of Claims 1 to 4, **characterized in that** PU dispersions (A) are composed of the components
A1) polyisocyanates,
A2) polymeric polyols having average molecular weights of 400 to 6000,
A3) optionally mono- or polyalcohols or mono- or polyamines
and at least one compound selected from
A4) compounds which have at least one ionic or potentially ionic group and/or
A5) nonionically hydrophilized compounds.

6. Binder composition according to one or more of Claims 1 to 5, **characterized in that** the PU dispersions (A) contain 7 to 45% by weight of A1), 50 to 91% by weight of A2), 0 to 15% by weight of A5), 0 to 12% by weight of A4) and optionally 0 to 30% by weight of A3), the sum of the components being 100% by weight and it being necessary for the sum of the components (A4) and (A5) not to be equal to 0.

7. Binder composition according to one or more of Claims 1 to 6, **characterized in that** the amine a) is a compound of the formula (VI)

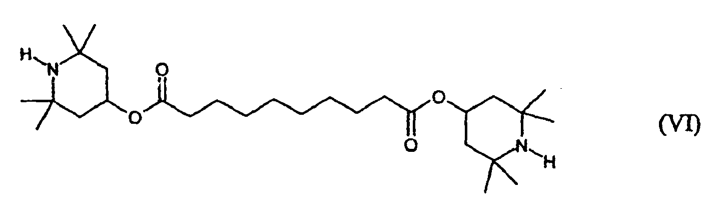

8. Binder composition according to one or more of Claims 1 to 7, **characterized in that** the compound b) is a compound of the formula (VII)

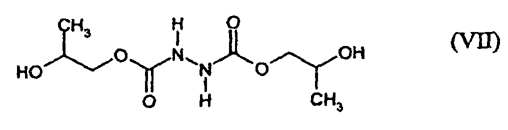

9. Process for the preparation of coating materials according to Claim 1 or 2, **characterized in that** a prepolymer is first prepared by reacting the components A1) with the components A2), A5), a) and b), optionally in the presence of a catalyst, and is then dissolved in a solvent, optionally in combination with the components b) and/or c), and then the components A3) and A4) are added and, in a further step, the prepolymer thus obtained is converted into an aqueous dispersion or solution by adding water.

10. Use of the binder composition according to Claim 1 or 2 in glass fibre sizes.

11. Use of the binder composition according to Claim 1 or 2 in adhesives.

12. Coating materials containing binder compositions according to Claim 1 or 2.

13. Glass fibres sized with a size containing binder compositions according to Claim 1 or 2.

## Revendications

1. Compositions liantes contenant :
A) au moins une dispersion aqueuse PUR,
B) au moins un agent de stabilisation ou mélange d'agents de stabilisation, contenant
a) au moins une amine avec l'unité structurale de la formule générale (I) : 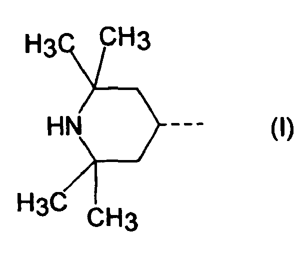 qui ne présente pas de radicaux hydrazide,
b) au moins un composé avec l'unité structurale de la formule générale (II) :
-CO-NH-NH- (II)
ainsi que
c) le cas échéant, un composant de stabilisation différent de a) et de b).

2. Compositions liantes contenant :
A) au moins une dispersion aqueuse PUR, contenant les unités structurales d'au moins un agent de stabilisation ou mélange d'agents de stabilisation B), à base de
a) au moins une amine avec l'unité structurale de la formule générale (I) : 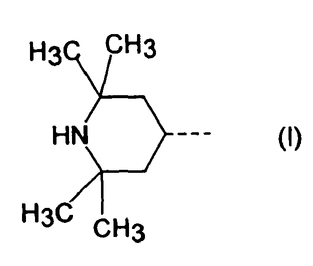 qui ne présente pas de radicaux hydrazide,
b) au moins un composé avec l'unité structurale de la formule générale (II) :
-CO-NH-NH- (II)
ainsi que
c) le cas échéant, un composant de stabilisation différent de a) et de b).

3. Composition liante selon la revendication 1 ou 2, contenant 78,0 à 99,8% en poids du composant A) et 0,2 à 22,0% en poids du composant B), où la somme des composants fait 100% et les données reposent sur la quantité de matières solides.

4. Composition liante selon la revendication 1 ou 2, contenant 0,1 à 11,0% en poids de l'amine avec l'unité structurale de la formule (I)(a), 0,1 à 11,0% en poids d'hydrazides avec l'unité structurale de la formule (II)(b) et le cas échéant, 0 à 5,0% en poids d'autres stabilisants c), différents de a) et de b), où les données reposent sur la teneur totale en matières solides.

5. Composition liante selon l'une ou plusieurs des revendications 1 à 4, **caractérisée en ce que** les dispersions PUR (A) sont élaborées à partir des composants :
A1) des polyisocyanates,
A2) des polyols polymères avec des poids molaires moyens allant de 400 à 6000,
A3) le cas échéant, des mono- ou polyalcools ou des mono- ou polyamines,
ainsi qu'au moins un composé choisi parmi
A4) des composés qui présentent au moins un radical ionique ou potentiellement ionique, et/ou
A5) des composés rendus hydrophiles, non ioniques.

6. Composition liante selon l'une ou plusieurs des revendications 1 à 5, **caractérisée en ce que** les dispersions PUR (A) contiennent 7 à 45% en poids de A1), 50 à 91% en poids de A2), 0 à 15% en poids de A5), 0 à 12% en poids de A4), ainsi que le cas échéant, 0 à 30% en poids de A3), où la somme des composants fait 100% en poids et où la somme des composants (A4) et (A5) doit être différente de 0.

7. Composition liante selon l'une ou plusieurs des revendications 1 à 6, **caractérisée en ce que** l'amine a) est un composé de la formule (VI) :

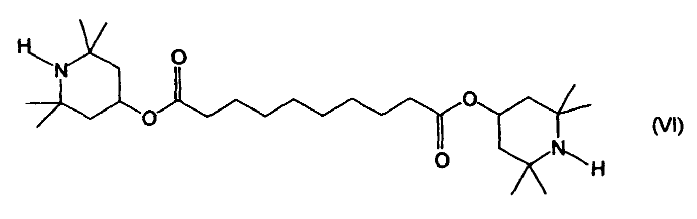

8. Compositions liantes selon l'une ou plusieurs des revendications 1 à 7, **caractérisées en ce que** le composé b) est un composé de la formule (VII) :

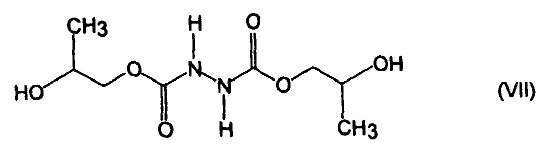

9. Procédé de préparation d'agents de revêtement selon la revendication 1 ou 2, **caractérisé en ce que** l'on prépare d'abord un prépolymère par réaction des composants A1) avec les composants A2), A5), a) et b), le cas échéant en présence d'un catalyseur, lequel est dissous ensuite dans un solvant, le cas échéant en combinaison avec les composants b) et/ou c), ensuite les composants A3) et A4) sont ajoutés et dans une autre étape, le prépolymère ainsi obtenu est converti en une dispersion ou solution aqueuse par addition d'eau.

10. Utilisation de la composition liante selon la revendication 1 ou 2, dans l'ensimage des fibres de verre.

11. Utilisation de la composition liante selon la revendication 1 ou 2, dans des colles.

12. Revêtement contenant les compositions liantes selon la revendication 1 ou 2.

13. Fibres de verre ensimées avec un ensimage contenant les compositions liantes selon la revendication 1 ou 2.
